# EUROPÄISCHE PATENTSCHRIFT

(11) **EP 3 801 909 B1**
(45) Veröffentlichungstag und Bekanntmachung des Hinweises auf die Patenterteilung: **30.03.2022**
(21) Anmeldenummer: 19716172.2
(22) Anmeldetag: 10.04.2019
(51) Int. Cl.: B02C 4/06, B02C 9/04, B02C 25/00

(54) **GETREIDEMÜHLE UND WALZENSTUHL MIT MEHREREN MAHLPASSAGEN ZUM OPTIMIERTEN MAHLEN VON MAHLGUT, SOWIE ENTSPRECHENDES VERFAHREN**
CEREAL MILLING DEVICE AND ROLLER MILL WITH A PLURALITY OF MILLING PASSAGES FOR OPTIMISED MILLING OF MATERIAL, AND CORRESPONDING METHOD
MOULIN À CEREALES ET MOULIN À CYLINDRES AVEC PLUSIEURS PASSAGES DE MOUTURE POUR MOUTURE OPTIMISÉE, ET PROCÉDÉ CORRESPONDANT

(30) Priorität: 25.05.2018 EP 18174239; 28.05.2018 CH 6782018
(43) Veröffentlichungstag der Anmeldung: 14.04.2021
(73) Patentinhaber: Bühler AG, 9240 Uzwil (CH)
(72) Erfinder: SCHNEIDER, Michael, 9552 Bronschhofen (CH)
(74) Vertreter: Leimgruber, Fabian Alfred Rupert
(86) Internationale Anmeldenummer: PCT/EP2019/059131
(87) Internationale Veröffentlichungsnummer: WO 2019/223930

(56) Entgegenhaltungen:
- EP-A1- 0 013 023
- WO-A1-2014/187799
- DE-A1-102008 040 095

## Beschreibung

### Gebiet der Erfindung

Die vorliegende Erfindung betrifft mechanische Verfahrens- und Vorrichtungstechnik zur Verarbeitung und Zerkleinerung eines Ausgangsproduktes mit spezifischen Ausgangsprodukteparameter in ein angestrebtes Endprodukt mit definierten Endprodukteigenschaften/Dispersitätseigenschaften, insbesondere betrifft die Erfindung Mühlenregel- und/oder Steuerungstechnik von chargenorientierten Prozessen der Lebensmittelindustrie, Kraftfutterindustrie, oder anderen technischen Anwendungsgebieten von Mühlen- oder Mahltechnologie, wie z.B. der Zerkleinerung von Steinen oder anderen groben Stoffen. In besonderem Focus der Erfindung steht die Steuerung und Überwachung von Mahl-/Mühlenanlagen, wie Getreidemühlen mit Walzenstühlen mit mehreren Mahlpassagen zum Mahlen oder Zerkleinern von Mahlgut, d.h. Regel- und Steuerungsvorrichtungen zur automatisierten Regelung und Steuerung von Prozessvorrichtungen von mechanischen Verarbeitungsanlagen von disperser Produkten, wie Mahl- und Walzsystemen, insbesondere Getreidemühlenanlagen mit einem oder mehreren Walzenstühlen. Die Erfindung bezieht sich weiter auf die technische Optimierung von Regelungsvorrichtungen für Getreidemühlen und andere Anlagen zur Verarbeitung und Zerkleinern von Getreide, insbesondere Anlagen zum Zerkleinern, Transportieren, Fraktionieren und Konditionieren sowie auf optimierte Regel- und Steuerverfahren und Regelvorrichtungen zum optimierten Steuern und Überwachen solcher Anlagen. Mögliche Anwendungen der erfindungsgemässen Vorrichtung betreffen zudem Mahl- und Walzsystemen mit real-time oder quasi-real-time Messung, real-time Überwachung und real-time Regelung/Steuerung von Betriebsparametern, wie Walzentemperatur, Walzenspalt, Walzendrehzahl, Walzenpresskraft und/oder Energieaufnahme eines oder verschiedener Walzenantriebe, und/oder mit real-time oder quasi-real-time Messungen von Inhaltsstoffen oder Qualitätsparametern während der Produktaufbereitung und - Verarbeitung in den Getreidemühlenanlagen zum Zweck der Prozessüberwachung (Messen, Monitoring) sowie Steuerung und/oder Regelung der Anlagen bzw. Prozesse, wie z.B. Messgrössen wie Wassergehalt, Proteingehalt, Stärkebeschädigung, Aschegehalt (Mineralstoffe) von Mehlen (oder Mahlzwischenprodukten), Reststärkegehalt, Mahlfeinheit etc. Die Erfindung kann jedoch, wie erwähnt, auch ganz allgemein auf Mühlensysteme angewendet werden, beispielsweise Kugelmühlen (ball mill) oder sogenannte semi-autogenously grinding Mühlen (SAG), die zum Zermahlen von grob körnigen Materialien, wie z.B. Erzen oder Zement usw., bestimmt sind. Auch bei solchen Mühlen wird der Durchsatz und die Produktequalitätsparameter mittels Einstellens verschiedener Stell- oder Führungsgrößen, wie z.B. Rotationsgeschwindigkeit der Mühlentrommel, Energieaufnahme der Mühlentrommel, Zufuhr des (grob-)körnigen Ausgangsmaterials/Eingangsstoffe, Wasserzufuhr bei Erzmühlen und/oder Austragsgeschwindigkeit des am Ausgang vorliegenden gemahlenen Materials, gesteuert. Zudem ist auch bei diesen Mühlen die Korngrößenverteilung des zermahlenden Materials ein wichtiges Qualitätsmerkmal. Sie kann insbesondere die Ausbeute der dem Mühlensystem nachgeschalteten weiteren Komponenten, wie z.B. der Flotation, beeinflussen. Typischerweise wird bei Mahlanlagen und Mühlensystemen ein möglichst hoher Durchsatz und Ausbeute bei hoher Produktqualität und bei niedrigem Energieverbrauch und Materialbedarf, d.h. Kosten, angestrebt.

Die vorliegende Erfindung betrifft somit in bevorzugter Anwendung Walzsystemen, Produktverarbeitungsanlagen und Mahlanlagen enthaltend Walzen oder Walzenpaarung, sowie entsprechende Verfahren zum optimierten Betreiben derartiger Mahl- und Walzsystemen bzw. Produktverarbeitungsanlagen. Die genannten Anlagen umfassen u.a. komplette Anlagen für (i) die Getreidemüllerei, (ii) Mehlaufbereitung für industrielle Bäckereien, (iii) Anlagen für die Spezialmüllerei, (iv) Produktionsanlagen zur Herstellung von hochwertigem Futter für Nutz- und Haustiere, (v) Spezialanlagen zur Herstellung von Futter für Fische und Krustentiere, (vi) Premix- und Konzentratenanlagen zur Herstellung von Wirkstoffmischungen, (vii) Ölgewinnung aus Ölsaaten, (viii) Behandlung von Extraktionsschroten und White Flakes, (ix) Hochleistungsanlagen zur Verarbeitung von Biomasse und Herstellung von Energiepellets, (x) Anlagen für die Ethanol-Herstellung, (xi) Komplette Reisprozessanlagen, (xii) Sortieranlagen für Lebensmittel, Saatgut und Kunststoffe, (xiii) Getreide- und Sojahandling, (xiv) Industrielle Mälzerei- und Schroterei-Anlagen, (xv) Maschinen und Anlagen zur Verarbeitung von Kakaobohnen, Nüssen und Kaffeebohnen, (xvi) Maschinen und Anlagen zur Herstellung von Schokolade sowie Füll- und Überzugsmassen, (xvii) Systeme und Anlagen zum Extrudieren (Kochen und Formen) von Frühstücks-Cerealien, Food- und Feed-Ingredients, Petfood, Aquafeed und Pharmaprodukten, (xviii) Planung von Nassmahltechnik-Gesamtlösungen und Fertigung von Maschinen und Prozess-Ausrüstungen zur Herstellung von Druckfarben, Coatings und Partikeldispersionen für die Kosmetik-, Elektronik- und Chemische Industrie, (xix) Isolation und Charakterisierung von Aleuron aus Weizenkleie, Reisfortifizierung etc.

### Hintergrund der Erfindung

Viele Prozess der mechanischen Verfahrenstechnik zielen auf die Veränderung der Partikeleigenschaften ab, wie z.B. Partikelgrösse durch Verkleinerung, oder auf eine Veränderung des Mischzustandes z.B. durch Sieben oder Sichten des Ausganggutes. Die Charakterisierung der dispersen Eigenschaften des Endproduktes, d.h. die Partikelmesstechnik und gewählte Parametrisierung durch Wahl geeigneter Messparameter, dient normalerweise dem Erfolgsnachweis der Massnahmen des jeweiligen Prozesses. Häufig wird dabei der Erfolg eines Prozesses selbst entscheidend vom dispersen Zustand des zu verarbeitenden Ausgangsproduktes/Gutes bestimmt. So lassen sich typischerweise bei mechanischen Mahlprozessen die Stoffe mit abnehmender Partikelgrösse schwerer zerkleinern und schwerer trennen. Die hier interessanten Prozesse der mechanischen Verfahrenstechnik lassen sich dadurch klassifizieren, ob mit ihnen eine Änderung des Dispersitätszustandes, wie z.B. das Zerkleinern innerhalb einer Mahlpassage einer Mühle, oder eine Änderung der Zusammensetzung, wie z.B. Aussieben innerhalb einer Sicht-/oder Siebpassage einer Mühle, verbunden ist. Ausgangsgut wie Endprodukt lassen sich durch verschiedene Merkmale charakterisieren, wie z.B. Grösse, Form, Festigkeit, Struktur, Farbe, Porosität, Homogenität etc. Die Merkmale können innerhalb des Prozessgutes verschieden angeordnet sein, z.B. als Primärpartikel, Agglomerate oder geordnete Strukturen etc. Die Merkmale sowie deren Anordnung/Mischzustand können für die Produkteeigenschaften entscheidend sein. Die Bedeutung mechanischer Prozesse und entsprechender Vorrichtungen in der stoffwandelnden Industrie ist enorm und umfasst die Chemie, die Nahrungs- und Futtermittelherstellung ebenso wie etwa die Baustoffherstellung. Die vorliegende Erfindung bezieht sich im Wesentlichen auf Mahlanlagen, wie sie z.B. bei Getreidemühlen zur Anwendung kommen. Grundsätzlich ist sie jedoch keineswegs auf diese Anwendungen beschränkt sondern kann allgemein bei der Steuerung, Kontrolle und Überwachung von Verarbeitungssystemen und - anlagen der mechanischen Verfahrenstechnik, die mehreren Verarbeitungslinien umfassen, eingesetzt werden.

Entscheidend für die Herstellung, Charakterisierung bzw. Beurteilung/Monitoring disperser Produkte ist es, die Wirkung der mechanischen Verarbeitungsvorrichtung, wie z.B. der Mahlanlage oder Getreidemühle, zu beurteilen, und die Betriebs-/ oder Prozessparameter bei der Verarbeitungsvorrichtung entsprechend zu steuern/regeln. Dazu ist es notwendig, die Eigenschaften, insbesondere die physikalischen, chemischen bzw. dispersen Eigenschaften des Ausgangs-, ev. Zwischen- und Endproduktes zu erfassen und zu parametrisieren (charakterisieren). Beispielsweise ist es für die Wahl und Steuerung eines Trennprozesses, wie ein Siebprozess, wichtig, Grössen- und Formverteilung und deren Anteile zu ermitteln. Bei der typischen Anwendung von mechanischen Verarbeitungsvorrichtungen werden bestimmte Produkteigenschaften und Merkmale beim Endprodukt erwartet. Eines der Ziele ist es, durch geeignete Wahl der Betriebs- oder Prozessparameter bei der Verarbeitungsvorrichtung, in Abhängigkeit des Ausgangproduktes, die Eigenschaften, insbesondere die Dispersitätseigenschaften des Endproduktes gezielt und reproduzierbar zu erhalten. Dabei haben die Dispersitätseigenschaften des Prozessgutes einen direkten Einfluss auf die angestrebten Produkteigenschaften, z.B. die Partikelgrösse des Mehls auf die Eigenschaften des Mehls bei der weiteren Verarbeitung. Die Wahl der Betriebs-/ oder Prozessparameter bei einer Prozessvorrichtung basiert somit sowohl auf der Ermittlung oder Messung von Produkteeigenschaften, insbesondere von Dispersitätseigenschaften. Häufig resultieren geforderte Produkteeigenschaften durch eine Bestimmung bestimmter Betriebs-/ oder Prozessparameter, welche auf Basis empirischer Optimierung und Anpassung verarbeitungs-, anwendungs- und/oder produkt-bezogen häufig von einem Operator oder Human Expert bestimmt wird. Wenn bekannt ist, mit welchen Ausgangsproduktemerkmalen, insbesondere welchen Dispersitätsgrössen der Ausgangsprodukte, sich die gewünschten Produkteeigenschaften erhalten lassen, ist zu bestimmen, welche Betriebs-/ oder Prozessparameter der Verarbeitungs-/Prozessvorrichtung diese in der jeweiligen Verfahrensstufe bzw. im Gesamtprozess einzustellen sind. Es ist meist charakteristisch für diese Prozesse, dass Zustand und Verhalten eines Produktes, insbesondere während des Verarbeitungsprozesses nicht bzw. nicht a priori oder nur ungenau bekannt und vorhersagbar sind. Obwohl die Partikel- und Produkteeigenschaftsmesstechnik heute im Vergleich zu früher sehr fortgeschritten ist, ist bei den meisten Systemen keine vollständige Beschreibung möglich. Die Auswirkungen von Maschinen, Apparaten und Prozess-/Betriebsparameter auf die Endprodukteeigenschaften, wie etwa deren Dispersitätseigenschaften, muss in den aller meisten Fällen für jedes Ausgangsprodukt und gewünschtem Endprodukt experimentell und/oder basierend auf der Erfahrung und Intuition des Operators bestimmt werden. Um bei der Vielzahl von Parametern den Überblick zu bewahren, kommt dabei einem strukturierten Vorgehen eine dominante Rolle zu. In vielen Fällen der mechanischen Verfahrenstechnik bilden die Dispersitätseigenschaften das Bindeglied zwischen Ausgangsstoffen, Zwischenprodukten und angestrebten Produkteeigenschaften. Nach Wahl der geeigneten Verarbeitungsanlage ist es für alle Mess- und Regelkonzepte grundlegend zu bestimmen, welche Betriebs- und Verarbeitungsparameter eine besonders direkte Abhängigkeit zu den erzielten Eigenschaften des Endproduktes in Abhängigkeit der Messeigenschaften des Ausganggutes aufweisen. Eine reproduzierbare Produktion und Skalierbarkeit bei der Verarbeitung durch eine bestimmte Anlage ist ansonsten bei derart komplexen Prozessen nicht möglich.

Die Anforderungen können am Beispiel einer Mahlanlage zum Zerkleinern von Mahlgut gezeigt werden. Nach Wahl einer geeigneten Mahlanlage in Abhängigkeit des Mahlgutes, muss das Prozessverhalten bestimmt werden, da weder das Zerkleinerungsverhalten des Mahlgutes eindeutig charakterisierbar ist, noch die Auswirkungen der Betriebs-/ und Prozessparameters der Mahlanlage auf die Endprodukt- bzw. Partikeleigenschaften eindeutig vorhersagbar ist. Abzuwägen für den Operator ist z.B. wie sensibel Durchsatz, Drehzahl/spezifische Energie oder geometrische Parameter der Mühle oder Mahlanlage, wie z.B. Spaltbreite zwischen Mahlwalzen, die Eigenschaften des Endproduktes, insbesondere die Dispersitätseigenschaften des Produktes beeinflussen. Wichtigste Zielgrösse, d.h. Dispersitätsgrösse, bei der Zerkleinerung von Mahlgut ist die angestrebte Partikelgrösse bzw. Partikelgrössenverteilung. Wegen den komplexen Zusammenhängen werden auch heute noch der Einfluss z.B. der Drehgeschwindigkeit der Walzen, des Durchsatzes, der Produkteführung in den Passagen, der Mahlkörperdichte und Mahlkörpergrösse auf die resultierende Partikelgrössenverteilung typischerweise experimentell, d.h. basierend auf "trial-and-error"-Verfahren und Erfahrungswerten, ermittelt. Hinzu kommt, dass bei entsprechenden Regel- und Steuertechniken wegen der Komplexität der Zusammenhänge zwischen Mahlguteigenschaften/-Messwerten, den Betriebs- und Prozessparametern und den angestrebten Endprodukteigenschaften bislang meist nur die Partikelgrösse als physikalische Grösse berücksichtigt werden kann.

Im Vordergrund der vorliegenden Erfindung stehen Mahl- und Mühlenanlagen zur Zerkleinerung von Mahlgut. Der Begriff Mühlenanlage, wie im Folgenden gebraucht, umfasst alle technologischen Vorrichtungen und Prozesse zur Gewinnung von körnigen und/oder pulverförmigen (mehlartigen) oder nur entspelzten oder gequetschten Endprodukten aus grobem, festem (und bei Getreidemühlen pflanzlichem) Mahlgut, welche zur Verarbeitung des Mahlgutes verwendet werden, insbesondere Getreidemühle. Mahlgut im Sinne dieser Anmeldung umfasst insbesondere alle Korn- und Getreidearten, welche zu einem Mahlprodukt bzw. Mahlendprodukt wie Mehl, Griess, Dunst und Schrot vermahlen wird. Solche Mahlanlagen finden z.B. auch im Rahmen der Schälmüllerei zur Entspelzung, dem Schälen, gegebenenfalls dem nachfolgenden Quetschen des Mahlgutes wie z.B. Getreidekörner, Verwendung. Die Korn- und Getreidearten/-sorten umfassen z.B. Weizen, Roggen, Dinkel, Mais etc., welche zu verschiedenen Arten von Mahlprodukten wie Mehl nach dem Prinzip der Hochmüllerei verarbeitet werden. Das Getreide wird im Normalfall dabei, bevor es vermahlen wird, gereinigt und mit Wasser benetzt, damit das Wasser in die Schale (Kleie) eindringen kann, die sich so besser vom Mehlkörper trennen lässt. Das Getreide wird dann mit Walzenstühlen und entsprechenden Mahlpassagen vermahlen. Anschliessend an die Mahlpassagen wird das Mahlgut gegebenenfalls in Siebpassagen auf einem Sichter/Plansichter gesiebt. Dabei wird das Mehl abgesiebt und der Schrot wiederum in Mahlpassagen weiter vermahlen, bis möglichst der ganze Mehlkörper herausgelöst ist. Diese Produktführung (Mahlen und gegebenenfalls Sichten) heisst Passage. Eine Vermahlungslinie einer Mahl-/Mühlenanlage kann mehrere Passagen umfassen, wobei das Mahlgut in der Vermahlungslinie zum Mahlprodukt/Mahlendprodukt verarbeite wird.

Im Stand der Technik wird Getreide in Walzenstühlen mit meist vier oder acht Metallwalzen gemahlen, die sich mit unterschiedlicher Drehzahl gegenläufig drehen (Voreilung). Man unterscheidet glatte und geriffelte Walzen mit Drall. Durch die Riffelung und die unterschiedlichen Drehzahlen werden die Getreidekörner aufgebrochen. Bei jedem Mahlvorgang entstehen unterschiedlich grosse Kornteile. Durch mehrfache Siebungen in Sichtern (auch: Plansichter) werden die Kornteile der Grösse entsprechend sortiert und getrennt. Das dabei anfallende, vordefinierte Mahlprodukt wird herausgesiebt und der restliche Schrot wieder auf einen Walzenstuhl aufgegeben, wobei abermals Mahlprodukt abgetrennt wird, bis alles Mahlprodukt herausgelöst wurde. Das zu erhaltende Mahlprodukt kann z.B. als Mehl (Korngrösse <180µm), Dunst (Korngrösse 180-300µm), Griess (Korngrösse 300-1000), Schrott (Korngrösse >1000µm), Vollkornmehl (etwa 80 % Durchfall durch 180 µm; enthält sämtlich Bestandteile des gereinigten Getreidekorns) vordefinierten sein. Bei den Anlagen des Standes der Technik durchlaufen Getreide und derartige Produkte zur Vermahlung typischerweise 10-16 Passagen. Der Begriff Passage, auch Strang oder Durchlauf, ist in der Getreidemüllerei definiert als die Produktführung in einer Mühle. Diese Produktführung bestehend aus dem beschriebenen Mahlen und anschliessendes Sichten, heisst Passage. Generell unterscheidet man als Passageart die Schrottpassagen, Plansichterpassagen, Kleieschleuder, Griessputzmaschiene, Auflösung und Ausmahlung. In den Schrotpassagen (z.B. Passagen B1 bis B5) werden die Schrote auf Riffelwalzen kontinuierlich zerkleinert. In der Auflösungspassagen (z.B. Passagen C1, C2, C4) wird auf Feinriffel- und Glattwalzen eine Auflösung der Mehl- bzw. Griessplättchen bewirkt. In den Mahlpassagen (z.B. Passagen C3 und C5 bis C11) werden Griess und Dunste zu typengerechten Mehlen zerkleinert. Griesse und Dunste enthalten stets angehaftete Kleienteile, welche separat behandelt werden müssen, z.B. auf separaten Passagen C1B und C2B.

Mühlenanlagen umfassen chargenorientierten Prozessen, welche hohe Massstäbe an Nachverfolgbarkeit und Ausfallsicherheit, wie sie in der Lebensmittelindustrie, Kraftfutter- oder auch Chemieindustrie notwendig sind. Die Steuerung dieser Prozesse verlangt komplexe Steuerungskonzepte und intelligente, adaptive Steuerungsvorrichtungen. Darüber hinaus gilt, dass, anders als in anderen Gebieten der Industrie, in welchen der Einfluss der verschiedenen Faktoren und Prozessparameter meist gut bekannt ist, die Dynamik eines Prozesses bestimmen, und in welchen sich die relevanten Prozesse deshalb durch entsprechende Gleichungen und Formeln einfach parametrisieren lassen bzw. die beteiligten Apparaturen und Vorrichtung einfach entsprechend ansteuern und regeln lassen, ist die Anzahl der relevanten Faktoren, die Mahlqualität und gleicherweise die Ausbeute des verarbeiteten Endproduktes beeinflussen, in der Müllerei ausserordentlich hoch. Es bedarf deshalb oft, dass ein Müller, i.e. ein Human Expert, nach der Analyse des Ausgangs-/Rohmaterials die gesamte Mahl- oder Mühlenanlage manuell anpassen und einstellen muss basierend auf seiner Intuition und Know-how, um gewünschte Resultate zu erhalten im Sinne der erwarteten Qualität und Ausbeute des Endproduktes (z.B. Ash Content, Yield, Baking Quality etc.). Diese Optimierung soll zudem eine Minimierung der Kosten berücksichtigen, d.h. insbesondere der Energieeffizienz. Ebenfalls zu beachten ist, dass die Mahleigenschaften des Ausgangsmaterials, z.B. des gewählten Weizens oder Getreides, fundamental sind für den Mahlprozess. Da die Mahlanlage typischerweise vom Obermüller geregelt werden muss, hat der Obermüller auch entscheidenden Einfluss auf und Kontrolle bei den Charakteristiken des produzierten Mehls. Das beginnt bei der Wahl der Weizenklasse, was sich sowohl auf die Marktklasse als auch auf den Produktionsortes oder-region des Weizens beziehen kann, um bestimmte Kornattribute, wie z.B. ein bestimmter Proteinbereich, zu beeinflussen. Der Müller kontrolliert auch die Weizenzusammensetzung (wheat blend/grists), welches in die Mahlanlage gegeben wird. Der Müller kann ebenfalls den Mahlfluss (mill flow), Walzendrehzahl (roll speed), Geschwindigkeitsunterschiede (speed differentials), Verteilung der geriffelten Walzen (fluted rolls) z.B. sharp-to-sharp, und Walzendruck bei Glattwalzen (smooth rolls). Weitere Regelmöglichkeiten hat der Müller in Kombination mit dem Sieben und dem Reinigen und schliesslich in der Mahlstromauswahl zum Vermengen des produzierten Endmehls. All diese Parameter und Regelmöglichkeiten werden vom Müller benutzt, um konsistent ein Mehl mit einer bestimmten Qualität zu erzeugen.

Wie das diskutierte Beispiel zeigt, bedürfen insbesondere z.B. die Mahlwalzen, wie sie u.a. in Getreidemühlen verwendet werden, einer ständigen Überwachung und gegebenenfalls Anpassung bzw. Korrektur der Betriebs- und Steuerungsparameter. Abgesehen von der Optimierung des Betriebs und der Charakteristiken des Endproduktes, kann beispielsweise vorkommen, dass ein sogenannter Trockenlauf, Aufschaukeln in der Regelsteuerung oder andere operative Anomalien auftreten. Dauert ein anormaler Zustand zu lange an, so kann z.B. die Temperatur der Mahlwalze in einen kritischen Bereich steigen und möglicherweise einen Brand oder Schäden an den Walzen verursachen. Operative Anomalien können den optimalen Betrieb der Anlage aber auch anders beeinflussen, insbesondere die Qualität, Ausbeute oder Energieverbrauch. Obwohl Mahlanlagen in vielen Bereich mindestens teilweise automatisierte sind, können derzeitige Systeme betreffend die automatische Steuerung und optimierten Betriebs nur schwer automatisiert werden. Im Stand der Technik werden Mühlensysteme deshalb oft noch manuell vom Bedienpersonal nach dessen empirischen Erfahrungswerten eingestellt.

Bei der Regelung und Überwachung von Mahlanlagen ist zu beachten, dass jede Passage separat überwacht und gegebenenfalls in ihrem Betrieb angepasst bzw. optimiert werden muss. Dabei ist die Steuerung lokal an der Mahlanlage, was die Überwachungsmöglichkeiten betreffend die Anzahl von gesteuerten Mühlen durch einen einzelnen Operator bzw. Müller limitiert. Auch sind die Stand der Technik Anlagen auch aus anderen Effizienzgründen problematisch, da jede Passage vollständig unabhängig vom Betrieb anderer Passagen vom Operator beurteilt wird. Zudem ist diese Art der Steuerung vermehrt fehleranfällig, da wertvolle vorhandene Information betreffend des Betriebs parallel-laufender und/oder ähnlich loklaisierter Anlangen ausser Acht gelassen wird.

Was die Automatisierung der Steuerung oder Regelung des Betriebs der Prior-art Systeme betrifft, beschränkt sich diese aus den obgenannten Gründen meist auf die Signalübertragung und Übertragung der Steuerbefehle, z.B. mittels SPS-Steuerung und angeschlossenem Inputvorrichtungen mit graphischem User Interface (GUI). SPS bezeichnet dabei eine speicherprogrammierbare Steuerung (auch: Programmable Logic Controller (PLC)), welche als Vorrichtung zur Steuerung oder Regelung einer Maschine oder Anlage eingesetzt und auf digitaler Basis programmiert werden kann. Ändert sich die Qualität des zugeführten Materials, vergeht typischerweise eine bestimmte Zeit, bis wieder ein hoher Durchsatz bei guter Produktqualität erreicht werden kann. Oft steht dem Operator ausserdem auch nur eine indirekte Qualitätskontrolle, die sich beispielsweise anhand eines Ausbeuterückgangs in einer der nachgeschalteten Komponenten ergibt, zur Verfügung. Dies erschwert zusätzlich eine gute Einstellung des Mühlensystems oder etwa das rechtzeitige Eingreifen beim Auftreten von Anomalien im Mahlprozess. Besteht in der Regelung und Steuerung eines Mahlwalzensystems aus einer Bedienungsperson (Obermüller) ist jedoch eine vollständige Beherrschung des gesamten Produktionsablaufes unbedingt erforderlich, um eine solche Steuerung "von Hand" überhaupt durchführen zu können. Das Ergebnis der Steuerung ist dabei wesentlich abhängig von dem jeweiligen fachlichen Können und der Erfahrung der Bedienungsperson, d.h. den betreuenden Obermüller. Wird weniger qualifiziertes Personal für die Bedienung eingesetzt, z. B. während spezieller Zeiten (Ferien, Nachtarbeit usw.), so kann sich unter Umständen eine Ergebnisschmälerung für die Mühle einstellen, etwa durch eine geringere Ausbeute an hellen Mehlen o.ä. Versuche, den Obermüller, durch prozessor-gestützte Regelvorrichtungen zu ersetzen, zeigten, dass sich das komplexe Wissen und Erfahrung des Obermüllers nicht einfach über regelgesteuerte Vorrichtungen automatisierten lässt, insbesondere nicht durch selbständig, autark funktionierende Regeleinrichtungen, die ohne regelmässige Routineeingriffe des Menschen auskommen.

Was die Mahl- und Verkleinerungssysteme betrifft, sind im Stand der Technik unterschiedliche Mahl- und Verkleinerungssysteme bekannt. Bei Getreide und Getreidemühlen ist der Walzenstuhl bei weitem die wichtigste Vermahlungsvorrichtung. Ob Mais, Weichweizen, Hartweizen, Roggen, Gerste oder Malz zu verarbeiten sind, meist bietet der Walzenstuhl die idealste Verarbeitung aller Getreidesorten. Der in einer Getreidemühle eingesetzte Prozess ist eine Stufenzerkleinerung. Der Mehlkern (Endosperm) wird schrittweise zerkleinert, indem er mehrere geriffelte oder glatte Stahlwalzenpaare passiert. Er wird in Sichtern durch Siebe von der Kleie und dem Keimling getrennt. Bei Walzenpaaren eines Walzenstuhls rotiert typischerweise eine Walze schneller als die andere. Durch die gegenläufige Rotation der beiden Walzen wird das Gut in den Walzenspalt hineingezogen. Form, Tiefe und Drall der Riffelung bestimmen zusammen mit dem Drehzahldifferential die Intensität des Vermahlens in jedem Schritt. Ebenfalls bekannt sind Schlagmühlen. Schlagmühlen eignen sich z.B. für das Vermahlen verschiedenster Produkte in Getreidemühlen (Getreide und Nebenprodukte der Vermahlung), Futtermittelwerken (Futtermittel, Hülsenfrüchte), Brauereien (Feinschrotherstellung für die Maischefiltration), Ölmühlen (Extraktionsschrote und geschrotete Ölkuchen) oder sogar Teigwarenfabriken (Teigwarenabfälle). Das Produkt wird der Schlagmühle oder Hammermühle aus einem Vorbehälter zugeführt und durch den Schlägerrotor erfasst. Die Teilchen werden so lange zerkleinert, bis sie die Öffnungen eines den Rotor umgebenden Siebmantels passieren können. Schliesslich sind auch Flockieranlagen bekannt, bei welchen das Flockierwalzwerk zusammen mit dem entsprechenden Dämpfapparat das Herzstück bildet. Im vorgeschalteten Dämpfapparat wird das Flockiergut hydrothermisch behandelt, bevor es in das Flockierwalzwerk gelangt. Die Anlage eignet sich für die Verarbeitung von Graupen (ganze, gereinigte und geschälte Haferkerne) sowie Grütze (geschnittene Haferkerne), Mais, Weichweizen, Gerste, Buchweizen und Reis. Anzumerken ist, dass sich auf Grund der spezifischen Probleme und Anforderungen in der Herstellung von Mehl und Griess aus Getreide und ähnlichen Produkten eine selbständige Gattung von Walzwerken, der sogenannte Müllerei-Walzenstuhl entwickelt hat, der im Unterschied etwa zur Mahltechnik von Gesteinen, der Herstellung von Flocken aus pflanzlichen Rohstoffen usw. eine ganz eigenartige Mahltechnik beinhaltet.

Selbst das Verteilen und Dosieren des Mahlgutes beim Walzenstuhl verlangt bei den Stand der Technik Vorrichtungen typischerweise die Interaktion eines Operators (Obermüllers). Bei Walzenstühlen aus dem Stand der Technik wird das Mahlgut im Normalfall mittig in den Einlauf der jeweiligen Mahlpassage eingeführt und aufgestaut. Das Mahlgut wird dann durch Gravitation, allenfalls mit Hilfe einer Paddelwalze, nach aussen verteilt und durch eine Speisewalze in den Mahlspalt befördert. Am Beginn des Mahlvorganges wird zuerst die Füllhöhe des Einlaufes manuell, z.B. von einem Operator, als Soll-Niveau vorgegeben. Dabei ist zu berücksichtigen, dass zum einen genügend freies Puffervolumen zur Verfügung steht (Niveau möglichst tief), aber zum anderen das Mahlgut bis zu den Enden der Austragseinheit gelangt (Niveau möglichst hoch). Mit einer Messvorrichtung (zum Beispiel Kraftaufnehmer) wird beim Betreiben eine Abweichung des Ist-Niveaus zum Soll-Niveau detektiert. Eine Regelvorrichtung stellt sicher, dass der Austrag so angepasst wird, dass das Ist-Niveau möglichst dem Soll-Niveau entspricht. Kraftaufnehmer haben den Nachteil, dass der Füllstand des Mahlguts nicht direkt, sondern indirekt gemessen wird und somit eine Kalibrierung vorgenommen werden muss, welche stark von den Mahlguteigenschaften abhängt. Dies ist bei allen anderen Messprinzipien beim Stand der Technik ebenfalls der Fall (zum Beispiel kapazitive Sensoren), wenn auch weniger ausgeprägt. Beim Stand der Technik fliesst im einfachsten Fall das Mahl nur dank der Gravitation in Richtung der Enden der Austragseinheit. Somit kann nicht in jedem Fall gewährleistet werden, dass bei den Enden der Austragseinheit Mahlgut vorhanden ist und zu den Walzenenden ausgetragen werden kann. Wird an den Walzenenden kein Mahlgut in den Mahlspalt gefördert, kann es zu schwerwiegenden Schäden kommen. Ebenfalls zum Stand der Technik gehören Verteilvorrichtungen (zum Beispiel Paddelwalzen), welche den Transport des Mahlguts zu den Enden der Austragseinheit unterstützen. Einer der Nachteile bei allen zum Stand der Technik gehörenden Systemen ist, dass diese Verteilerfunktion nicht im Betrieb automatisch und unabhängig vom Mahlgut gesteuert oder geregelt werden kann. Nachteilig bei solchen Walzenstühlen ist, dass der Operator manuell die Füllhöhe als Soll-Niveau definieren muss. Diese "empirische" Einstellung des Soll-Niveaus soll auch sicherstellen, dass die Verteilung von Mahlgut entlang der Länge der Speisewalze gewährleistet wird. Eine Überprüfung/Überwachung der Verteilung von Mahlgut entlang der Speisewalze findet, wenn überhaupt, nur visuell statt. Im Betrieb kommt es vor, dass bei ungeeigneter Wahl des Soll-Niveaus und/oder bei ungeeigneter Voreinstellung der Verteileinrichtung das Mahlgut nicht bis zu den Enden der Austragseinheit gelangt. Die korrekte Einstellung ist auch für den Fachmann schwierig. Bei sich im Betrieb ändernden Mahlguteigenschaften ist bei kritischen Passagen mit dem Stand der Technik das Risiko für einen Störfall noch grösser. Zum anderen ist es wichtig, dass bei der mittigen Produkteinführung das Mahlgut nicht entmischt ist, da das Produkt im Einlauf nicht vermischt wird. Das Risiko für entmischtes Mahlgut im Einlauf ist besonders dann gegeben, wenn durch zwei oder mehr zuführende Rohre unterschiedliche Mahlgutqualitäten in den Einlauf fliessen.

Unbesehen der spezifischen Eigenschaften der Getreidemühlen, ist bei allen der diskutierten Vermahlungssysteme des Standes der Technik bekannt (siehe z.B. DE-OS 27 30 166), dass es immer wieder Störeinflüsse gibt und geben kann, die idealisiert Vermahlungsbedingungen nicht zulassen. Zu diesen Störeinflüssen zählen unter anderem ungleichmäßige Walzentemperaturen, Veränderung der Federcharakteristik eines Walzenpaares, Veränderung des Mahlspaltes oder Mahldruckes etc. Die Erfindung bezieht sich insbesondere auf eine Steuer- und Regeleinrichtung zur stabilen, adaptiven Steuerung und Regelung von den beschriebenen Vermahlungssystemen zur Vermahlung von Getreide und zur Beeinflussung von Prozesselementen (Mahlgut und Anlageelemente) und diesen zuordenbaren operativen Prozessparametern der Getreidemühlenanlagen unter rechtzeitiger Erkennung von Störeinflüssen oder anderen operativen Anomalien. Bekannt ist, dass die Bereitstellung und Automatisierung derartiger Steuer- und Regelsystemen komplex ist, da eine Vielzahl von mindestens teilweise gegenseitig abhängigen, d.h. korrelierten, Parameter berücksichtigt werden müssen (z.B. EP0013023B1, DE2730166A1). So wird der Betrieb der Vermahlungsvorrichtungen durch eine Vielzahl von Parametern beeinflusst, wie z.B. durch die Auswahl der Getreideart oder der Getreidemischung und des Anbaugebietes, der Erntezeit, der gewünschten Qualitätskriterien, des spezifischen Gewichtes und/oder der Feuchtigkeit der einzelnen Getreidesorten bzw. der Getreidemischungsanteile, der Lufttemperatur, der relativen Luftfeuchtigkeit, der technischen Daten der in der Mühlenanlage verwendeten Anlageelemente und/oder der gewünschten Mehlqualität als vorgegebene Prozessgrössen und der Auswahl des Abstandes, des Mahldruckes, der Temperatur und/oder der Leistungsaufnahme der Motoren der Mahlwalzen, der Durchflussmenge und/oder der erzielten Feuchtigkeit des Mahlgutes und/oder der Qualität des Mehles bezüglich der Mischungsanteile, welche ausreichend differenzierte Steuerung des Vermahlungsprozesses in den Getreidemühlenanlagen erschwert. Häufig genügt es schon, dass einige wenige dieser Prozessgrössen und operativen Prozessparameter ausserhalb ihrer Toleranz rutschen, um den Betrieb der Mühle massiv zu beeinflussen. Dieser Komplexität des Prozesses ist es zu verdanken, dass trotz allen Bemühungen einer Automatisierung der Anlangen, der Obermüller immer noch aktuell ist, da er, als "human expert", darüber entscheiden muss, ob eine Änderung der den Eingangssignalgrössen jeweils zugeordneten Steuersignale wünschenswert erscheint oder nicht. Der Obermüller wird dabei stets die Zielgrössen berücksichtigen. Hat er eine optimale Zuordnung zwischen den genannten Eingangssignalgrössen und den Steuersignalgrössen gefunden, so wird diese Zuordnung typischerweise durch entsprechende Speicherbelegung und -adressierung innerhalb der Getreidemühlenanlage gewährleistet.

Allgemein ist die heute bekannte Hochmüllerei gekennzeichnet durch ein wiederholtes Vermahlen und Sichten nach jeder Mahlpassage. Dies gilt sowohl in der Weichweizen- wie Hartweizenmühle sowie der Maismühle. In früheren Verfahren wurde dieser Vorgang 15 bis 20-mal wiederholt. Heutige Systeme erreichen bei guter Betriebsführung dieselben Resultate dieselben Resultate bei zwölf- bis fünfzehnmaliger Vermahlung. Dabei ist ein guter Operator/Müller in der Lage, selbst aus stark variierenden Rohmaterialien durch Mischen der verschiedenen Getreidequalitäten und gezielter Mühlenführung insbesondere durch das sehr schonende stufenweise Aufschliessen der verschiedenen Partien jedes Getreidekornes die z.B. von den weiterverarbeitenden Technologien, Bäcker, Teigwarenfabrik usw. geforderten Qualitätsstandards zu erreichen. Um den geforderten Anforderungen zu genügen, muss eine Mahlanlage von einer bestimmten Rohmaterialmenge, d.h. Mahlgutes, eine bestimmte Menge Mahlendprodukte mit entsprechender Qualität und Produkteparameter herausarbeiten, wobei eine Getreidemühle stets bestrebt ist, eine möglichste hohe Ausbeute aus Mahlprodukt (z.B. Mehl, Griess.. usw.) zu erzielen. Nur bei Einhaltung der geforderten Qualitätskriterien und Rahmenparameter ist der Betrieb einer Mahlanlage gut. Ein wesentlicher Aspekt ist der Umfang der erforderlichen Betriebsmittel, der in der Mühle z.B. direkt abhängt von der Anzahl der Mahl- und Siebpassagen. Alle Bestrebungen der jüngeren Zeit zeigen, dass bei der Hochmüllerei ohne direkte Verminderung, sei es der Ausbeute oder der Mahlproduktqualität, die Vermahlung nicht ohne weiteres weiter verkürzt oder optimiert werden kann, so dass diesbezüglich eine Verlangsamung der Entwicklung des müllerischen Mahlverfahrens und der Steuerung solcher Mahlanlagen feststellbar ist.

Insbesondere für dynamisch reagierende Prozessleitsysteme zur verfahrenstechnischen Steuerung und Bedienung der Mahlanlangen fehlen in alle Mahlverfahren entsprechend Lösungen, wenn es um die Automatisierung der Materialtransporte oder komplexen Chargenprozesse innerhalb der Mahlanlage oder Mahlpassage geht. Schwierigkeit bereitet dabei auch die Erhaltung der Prozesssicherheit durch das Produktions-/ Prozess-/ und Verteilleitsystem. Die durch gesetzliche Bestimmungen geforderte und meist für Zertifizierungen erforderliche Rückverfolgbarkeit vom Mahlendprodukt bis zum Lieferanten der Rohstoffe/Mahlgut kann durch die Stand der Technik Vorrichtungen meist nur ungenügend gewährleistet werden. Dies trifft insbesondere in Bereichen der Automatisierung und Steuerung von Getreidemühlen wie Anlagen der Lebensmittel-, Misch- und Tierfutterindustrie zu.

Das Dokument EP 0013023 A1 des Standes der Technik offenbart ein Verfahren zum Vermahlen von Getreide und entsprechende Getreidemühlenanlagen. EP 0013023 A1 schlägt zur Erleichterung der Führung des Verfahrens und der Getreidemühlen durch den Obermüller sowie zur besseren Arbeitsteilung zwischen Obermüller und Steuerung. Für das Verfahren wird von (i) vorgegebenen Prozessparametern wie Luftfeuchtigkeit, Lufttemperatur, Getreideart etc., (ii) Zielgrössen wie Ausbeute, Aschegehalt oder Feuchtigkeit des Endproduktes, und (iii) operativen Prozessparametern als innerhalb eines Mahlprozesses steuer- und regelbare Parameter wie Walzenspalt, Walzendruck oder Walzengeschwindigkeit ausgegangen, die in ihrer Gesamtheit als Prozessgrössen bezeichnet werden. Basierend auf einer qualitativen und quantitativen Bewertung der Prozessgrössen werden die Eingangssignale zur Steuerung von Anlageelemente der Mahlanlage. EP 0013023 A1 basiert in seiner Lehre bewusst darauf den Obermüller, also den Menschen, in die Verfahrensführung der Getreidemühle mit einzubeziehen. Mit anderen Worten soll die Erfindung ein Mittel sein, um ein stabileres Führen der Mühle und verbessertes Einhalten der Zielgrößen durch den Obermüller sicherzustellen. Durch die Erfindung sollen Prozessgrössen, welche sich zur computer-gestützten Beurteilung eignen, bzw. deren Einfluss auf mögliche Einstellungen der Eingangssignale zur Steuerung berechenbar ist, in entsprechende Gruppen zusammengefasst werden und Gruppenweise als Eingangssignalgrössen für die Steuerung mittels zugeordneten Steuersignalen verwendet werden. Der Obermüller behält die Verfahrensführung, erhält jedoch durch die basierend auf Messdaten generierten Eingangssignalgrössen Unterstützung. Die Unterteilung der Parameter erlaubt dabei eine transparente Zusammenarbeit zwischen Obermüller und automatisierter Signalgrössenerzeugung. DE 10 2008 040 095 A1 zeigt eine Anlage zum Verarbeiten von Getreide. Die erfindungsgemässe Anlage umfasst ein globales Regelungs-System, das sich über einen Grossteil der Einheiten der Anlage erstreckt und ein lokales Regelungs-System, das einer jeweiligen Einheit zugeordnet ist. Die Regelung der Anlage erfolgt unter Anwendung fester globaler Regelungssätze und fester lokaler Regelungssätze, was die Konfiguration der Anlage ergibt. Endprodukte und gewünschte Eigenschaften werden vom Obermüller in der Anlage definiert und geben die Produkte-Rezepte vor. Die Bearbeitungs-Einheiten der Anlage sind mit Sensoren versehen, deren Resultate dem Obermüller zur lokalen oder globalen Regelung zugeführt werden (z.B. als optischer oder akustischer Alarm). Die dem Obermüller zugeführte Sensor-Information berücksichtigt dabei die lokale und globale AnlagenKonfiguration und Produkt-Rezepte. WO 2014/187799 A1 schliesslich zeigt ein Verfahren für eine Getreidevermahlung mittels einer Mahlanlage. Mittels eines Prozesssimulationsmoduls werden basierend auf den mittels der Betriebsparameters definierten Einstellungen der Anlage Ausbeute- und Eigenschaftsparameter von resultierenden Mehle simuliert. Basierend auf den simulierten Mehlen wird das nächstliegende Handelsmehl mit der kleinste Abweichung der Ausbeute-, Eigenschafts- und Toleranzparameter zugeordnet. Ausgehend vom simulierten Mehl wird ein Gütewert für jedes der Mehle berechnet. Iterativ werden die Betriebsparameter im Prozesssimulationsmoduls so lange verändert, bis ein genügender Gütewert für das resultierende Handelsmehl erreicht wird.

### Zusammenfassung der Erfindung

Es ist eine Aufgabe der vorliegenden Erfindung, die aus dem Stand der Technik bekannten Nachteile und technischen Probleme zu lösen. Insbesondere soll eine optimierte, insbesondere intelligente und/oder adaptive Steuerungs-/Regelvorrichtung zur Optimierung und einfachen Steuerung der Vermahlungslinie und/oder Passagen eines Walzensystems bereitgestellt werden, mit dem die Vermahlung und/oder Schrotung optimiert und automatisiert durchgeführt werden kann. Dabei soll die Betriebssicherheit einer Mühle erhöht und gleichzeitig der Betrieb optimiert werden. Insbesondere soll die Arbeit eines Operators technisch vereinfacht werden und es sollen mehr Mahlanlagen durch den gleichen Operator betrieben werden können. Im Weiteren sollen die technischen Mittel bereitgestellt werden, um auf auftretende Anomalien schnell, insbesondere in real-time oder quasi-real-time, reagieren zu können und passagen- und/oder Mahlanlagen übergreifende Einflüsse automatisierte erfasst und der Betrieb entsprechend angepasst werden kann.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung für eine Mühlenanlage umfassend ein oder mehrere Mühlen mit ein oder mehreren Verarbeitungslinien zur industriellen Herstellung einer Vielzahl von Mahlprodukten dadurch erreicht, dass eine Verarbeitungslinie bzw. Passage mindestens eine Mahlpassage (B, C) mit Mahlwalzenpaaren (B₁ (B₁₁/B₁₂), B₂, Bₓ; C₁ (C₁₁/C₁₂), C₂, Cₓ) zum Vermahlen eines Mahlgutes und mindestens eine nachgeordnete Siebpassage (S) zum Sichten oder Sieben des Mahlgutes umfasst, dass über eine Vermahlungslinie ein spezifisches Mahlprodukt mit spezifischen Ausbeuteparametern und Mahlproduktparametern erzeugt wird und wobei jede Mühle der Mühlenanlage mindestens eine speicherprogrammierbare Steuerung (PLC) zur lokalen Steuerung und/oder Reglung von den Vermahlungslinien zugeordneten Verarbeitungsvorrichtungen (Bₓ/Cₓ/Sₓ) über zugeordnete I/O Interfaces umfasst, dass die Mühlenanlage eine zentrale Regel- und Steuerungsvorrichtung zur optimierten Steuerung der Mühlenanlage umfasst, wobei die speicherprogrammierbare Steuerungen (PLC) bidirektional über Netzwerkinterfaces (202) mit der zentrale Regel- und Steuerungsvorrichtung verbunden und mittels von der zentrale Regel- und Steuerungsvorrichtung übertragenen Steuerparametern ansprechbar sind und dass die Verarbeitungsvorrichtungen (Bₓ/Cₓ/Sₓ) einer Verarbeitungslinie basierend auf den übertragenen Steuerparametern der Regel- und Steuerungsvorrichtung mittels den speicherprogrammierbare Steuerungen (PLC) remote über die zugeordneten I/O Interfaces ansteuert und im ihrem Betrieb einzeln optimiert geregelt und/oder remote gesteuert werden. Die remote Steuerung und Regelung der Verarbeitungsvorrichtungen (Bₓ/Cₓ/Sₓ) von lokalen Maschinenprozesse der Verarbeitungsvorrichtungen (Bₓ/Cₓ/Sₓ) kann z.B. mittels der Regel- und Steuerungsvorrichtung in Echtzeit(real-time)-Datenaustausch erfolgen. Die Regel- und Steuerungsvorrichtung kann z.B. ein Netzwerkinterface umfassen, mittels welchem die Regel- und Steuerungsvorrichtung auf ein Kontrollsystem der Mühle umfassend die speicherprogrammierbare Steuerungen (PLC) und die Netzwerkinterfaces zugreift. Die zentrale Regel- und Steuerungsvorrichtung kann weiter Mittel zum Generieren der zu übertragenden Steuerparameter in Abhängigkeit von passagen-spezifischen und/oder passagen-übergreifenden Batch-/Chargen-Parameter umfassen, wobei mittel mindestens einem der Steuerparameter basierend auf einem oder mehreren der passagen-spezifische und/oder umgebungsspezifischen Parametern verschiedene Vermahlungslinien mit zugeordneten Verarbeitungsvorrichtungen (Bₓ/Cₓ/Sₓ) mittels der Regel- und Steuerungsvorrichtung zentral optimiert werden und/oder einheitlich geregelt werden. Die passagen-übergreifenden Parameter können z.B. ortsabhängige Messparameter umfassend Luftfeuchtigkeit und/oder Luftdruck und/oder Umgebungstemperatur umfassen und die passagen-spezifischen Parameter können z.B. lokale Betriebsparameter der Verarbeitungsvorrichtungen (Bₓ/Cₓ/Sₓ) umfassend Energieverbrauch der Mahlwalzenpaaren (B₁, B₂, ..., Bₓ; C₁, C₂, ..., Cₓ) und/oder Vordruck und/oder Eintrittstemperatur des Mahlgutes umfassen. Mittels der Regel- und Steuerungsvorrichtung können z.B. die passagen-übergreifenden Parameter global, d.h. vorrichtungs-übergreifend für mindestens zwei Mahlpassagen optimiert und geregelt werden, während die passagen-spezifischen Parameter unabhängig auf die jeweilige Mahlpassage bezogen optimiert und geregelt werden. Die zentrale Regel- und Steuerungsvorrichtung kann z.B. operative Prozessrezepte umfasst, wobei basierend auf einem operativen Prozessrezept eine Batch-/Chargen-Steuerung mit einer definierten Verarbeitungsfolge der Verarbeitungseinheiten (Bₓ/Cₓ/Sₓ) einer der Vermahlungslinie oder Passage geregelt und/oder gesteuert wird, und wobei basierend auf dem operativen Prozessrezept aus einem oder mehreren Eingangsstoffen mit spezifischen Eigenschaftsparametern eine definierte Menge eines Endproduktes mit spezifischen Eigenschaftsparameter erzeugt wird. Während des Vermahlungsprozesses eines operativen Prozessrezeptes können die operativen Steuerparameter und/oder die Batch-/Chargen-Parameter mittels der Regel- und Steuerungsvorrichtung kontinuierlich überwacht werden, wobei bei der Detektion einer definierbaren Parameterwertschwankung oder Anomalie als definierte Abweichung der überwachten Steuerparameter und/oder die Batch-/Chargen-Parameter vom definierten Steuerparameter und/oder die Batch-/Chargen-Parameter die Steuerparameter automatisiert mittels der Regel- und Steuerungsvorrichtung korrigiert und/oder angepasst werden. Die passagen-spezifischen Messparameter können z.B. weiter mindestens Messparameter betreffend die Ströme und/oder Leistungsaufnahme eines oder mehrerer Walzenstühle der Mühlenanlage umfassen. Die ein oder mehrere Walzenstühle können z.B. Riffelwalzen (B₁ (d.h. das Walzenpaar B₁₁, B₁₂), B₂ (B₂₁, B₂₂), ..., Bₓ (Bₓ₁, Bₓ₂)) und/oder Glattwalzen (C₁ (d.h. das Walzenpaar C₁₁, C₁₂), C₂ (C₂₁, C₂₂),..., Cₓ (Cₓ₁, Cₓ₂)) umfassen. Die passagen-spezifischen Messparameter können z.B. mindestens Messparameter betreffend die Ströme und/oder Leistungsaufnahme aller Walzenstühle der Mühle umfasst. Mittels prozess-typischer operativer Steuerparameter eines optimierten Batch-/Chargen-Prozesses können z.B. im Normbereich definierte Qualitätsparameter des Endproduktes und spezifische Mehlausbeute in Abhängigkeit vom den Eingangsprodukten bestimmt werden. Dadurch lassen sich Abweichungen von Normbereich triggern und detektieren. Die definierten Eigenschaftsparameter des Endproduktes können weiter z.B. mindestens Partikelgrössenverteilung und/oder Stärkebeschädigung und/oder Proteinqualität und/oder Wassergehalt umfassen. Die überwachten, operativen Steuerparameter und/oder die Batch-/Chargen-Parameter können z.B. mindestens Ausbeute und/oder Energieaufnahme/-verbrach und/oder Durchsatz/Maschinenlaufzeit umfassen. Die zentrale Regel- und Steuerungsvorrichtung kann z.B. eine einheitliche web-basierte Überwachung verschiedener Vermahlungslinie anzeigbar umfassen, mittels welcher die Mühlenanlage zentral überwacht und/oder optimiert gesteuert wird. Ein Überwachungs- oder Kontrolldisplay des Kontrollsystems der Betriebsvorrichtung und/oder der Regel- und Steuerungsvorrichtung kann z.B. zusätzlich einen Annäherungssensor und/oder Bewegungssensors umfasst, wobei das Display automatisch an- und ausgeschaltet wird in Abhängigkeit der Messergebnisse des Annäherungssensors und/oder Bewegungssenors der Mahlanlage basierend auf der gemessenen Distanz zu einem Operator der Mahlanlage und/oder der Mühle. Dies erlaubt neben der Energiesparfunktion die Lebensdauer/Betriebsdauer des Displays erheblich zu erhöhen.

Insbesondere ist einer der Vorteile der Erfindung, dass sich Mahlanlagen auf eine neue Art sich vorrichtungsübergreifend optimieren lassen. Die Prozessfunktion bzw. Verarbeitungsfunktion nach einer geeigneten Wahl von Mahlpassagen einer Mahlanlage für ein bestimmtes Mahlgut sollte möglichst optimiert und reproduzierbar für den Betrieb der Anlage sein. Da sich jedoch typischerweise weder das Verkleinerungsverhalten eindeutig charakterisieren lässt, noch die Auswirkungen von Prozess- bzw. Betriebsparametern auf die Partikeleigenschaften eindeutig vorhersagbar sind, d.h. wie und in welcher Abhängigkeit beeinflussen Durchsatz, Drehzahl bzw. spezifische Energie, Energieaufnahme der Mahlvorrichtungen oder geometrische Parameter der Mahlanlage die Eigenschaften, insbesondere die Dispersitätseigenschaften des Mahlproduktes, ist eine optimierte Regelung der Betriebsparameter entscheidend. Durch die zentrale Steuerungsmöglichkeit mittels der erfindungsgemässen Vorrichtung und der getrennten Regelmöglichkeit von passagen-spezifischen und globalen Betriebs- oder Prozessparameter ist eine neue Art von optimierten Betrieb von Mahlanlagen möglich, welche auf einer effizient Steuerung und parameter-basierte Adaption des Betriebs in Echtzeit beruht.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegten Figuren illustriert:

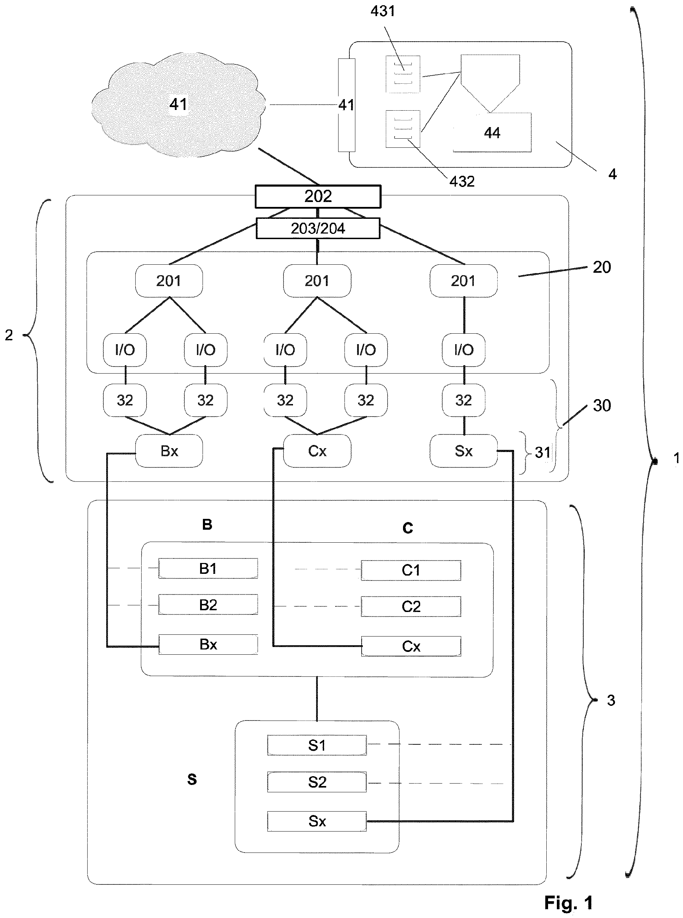

Figur 1 illustriert schematisch eine Darstellung einer erfindungsgemässen Ausführungsvariante, bei welcher z.B. die Passage 3 mit den Walzenstühlen (Bₓ/Cₓ) geregelt und/oder gesteuert und/oder überwacht wird, unterteilt in B Passage (hier: Riffelwalzen B₁ (Walzenpaar B₁₁, B₁₂),...,Bₓ (Bₓ₁/Bₓ₂)) und C Passage (hier: Glattwalzen C₁ (Walzenpaar C₁₁/C₁₂),...,Cₓ). Die Mühlenanlage 1 umfasst ein oder mehrere Mühlen oder Betriebsvorrichtungen 2 (Plants) mit jeweils ein oder mehreren Verarbeitungslinien/Passagen 3 zur industriellen Herstellung von diversen Mahlprodukten. Eine Verarbeitungslinie oder Passage 3 kann dabei mindestens eine Mahlpassage B, C mit Mahlwalzenpaaren B₁, B₂,...,Bₓ; C₁, C₂, ...,Cₓ zum Vermahlen eines Mahlgutes umfassen und/oder mindestens eine nachgeordnete Siebpassage S₁, ..., Sₓ zum Sichten oder Sieben des Mahlgutes. Über die Vermahlungslinie 3 wird ein spezifisches Mahlprodukt mit spezifischen Ausbeuteparametern und Mahlproduktparametern erzeugt. Jede Betriebsvorrichtung oder Mühle 2 der Mühlenanlage 1 umfasst mindestens eine remote-ansprechbare, speicherprogrammierbare Steuerung 201 (typischerweise als PLC (Programmable Logic Controller) bezeichnet) zur lokalen Steuerung und/oder Reglung von den einer oder mehreren Vermahlungslinien 3 zugeordneten Verarbeitungsvorrichtungen 31 /Bₓ/Cₓ/Sₓ über zugeordnete I/O Interfaces 32. Die Steuervorrichtung 4 steuert zentral, insbesondere z.B. web-basiert, die Verarbeitungsvorrichtungen 31 mehrerer Passagen 3 einer oder mehreren Mühlen 2.

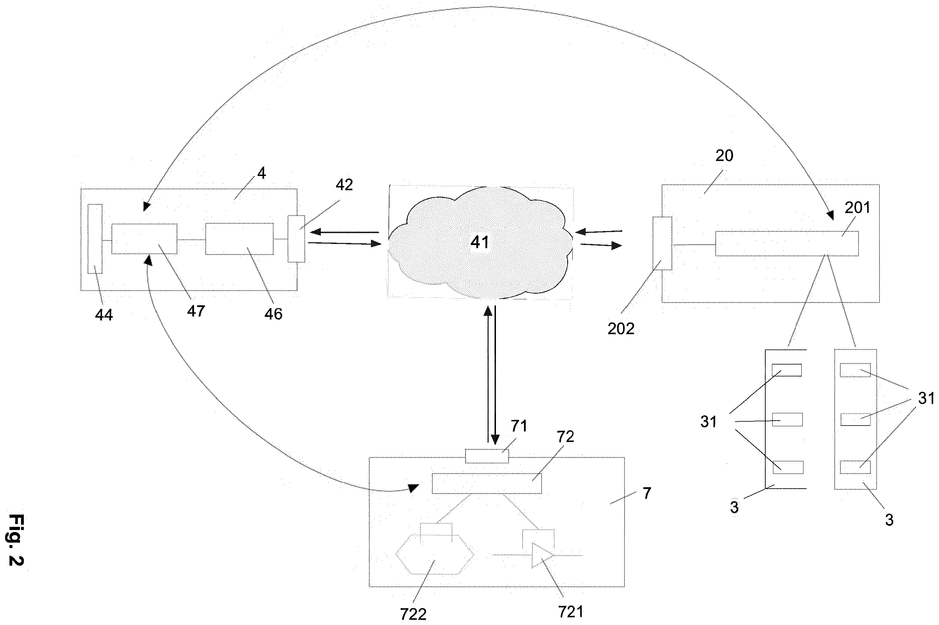

Figur 2 illustriert schematisch eine Darstellung einer erfindungsgemässen Ausführungsvariante, in welcher die Regel- und Steuerungsvorrichtung 4 über ein Interface 42 mit dem weltweiten Backbone-Netzwerk, d.h. dem Internet, und/oder einem Intranet verbunden ist. Die Regel- und Steuerungsvorrichtung 4 ist mittels des Netzwerkinterface 42 über ein Datenübertragungsnetzwerk 41 und dem Network Interface 202 mit dem Kontrollsystem der Betriebsvorrichtung (Plant Control System) 20 verbunden. Eine Web-Server Applikation 72 stellt die gewünschten Anzeige- und Input/Output-Möglichkeiten und/oder Kontroll-/Überwachungsseiten 721/722 für einen Remote-Client 7 oder Browser zur Verfügung, wobei der Remote-Client 72 mittels des Netzwerkinterface 71 mit dem Netzwerk 41 verbunden ist. Die Regel- und Steuerungsvorrichtung 4 stellt zudem die notwendigen Datendienste oder Schnittstellen bereit, um den Datenaustausch zwischen der lokalen Regel- und Steuerungsvorrichtung 4 als Machine/Process Server und dem remote System 7 als Client zu ermöglichen. In dieser Ausführungsvariante ist als einzige Voraussetzung für ein Remote-Viewing der Daten und/oder Webseiten des Web-Server 72 ein Standard-Browser Interface notwendig. Wird eine speicherprogrammierbare Steuerung (SPS, Programmable Logic Controller (PLC)) 201 im Kontrollsystem 20 der Betriebsvorrichtung 2, z.B. der Mühle, eine Optimierung, oder etwa Unternehmensspezifische Steuersoftware für den real-time Datenaustausch mit dem Kontrollsystem 20 verwendet, werden kompatible Datenaustauschdienste benötigt. Z.B. kann der PLC 201 mittels einem Control Client (z.B. OPC UA Client) und einem entsprechenden Interpreter der Regel- und Steuerungsvorrichtung 4 über ein entsprechendes Protokoll (z.B. OPC UA) standardisiert oder proprietär ansprechbar sein. In dieser Ausführungsvariante stellt der Web-Server/Datendienst 46 (z.B. als Thin Server realisiert) die Verbindung zwischen der Betriebsvorrichtung 2 (z.B. als Thin Client realisiert) bzw. Prozess und dem Internet bereit. Der PLC 201 oder ein proprietärer Controller umfassen das Plant Control System 20 mittels welchem die Verarbeitungseinheiten 31 der Verarbeitungslinie 3 steuern und/oder regeln lassen. Die meisten PLCs, wie z.B. PLC von AB, Schneider/Modicon, oder Siemens, unterstützen mindestens eine serielle Verbindung mit entsprechenden Kommunikationsprotokollen der PLC-Hersteller oder Drittanbieter. Typischerweise werden die zugehörigen Datentransfer-Treiber von den Thin Server-Hersteller als embedded Softwareapplikationen bereitgestellt. Für bestimmte Ausführungsvarianten, welche PLCs, Optimierungen oder firmen-spezifische Software/Protokolle für den Datenaustausch in Echtzeit benötigen, kann ein entsprechender Remote-Server und kompatible Datenaustauschdienste notwendig sein.

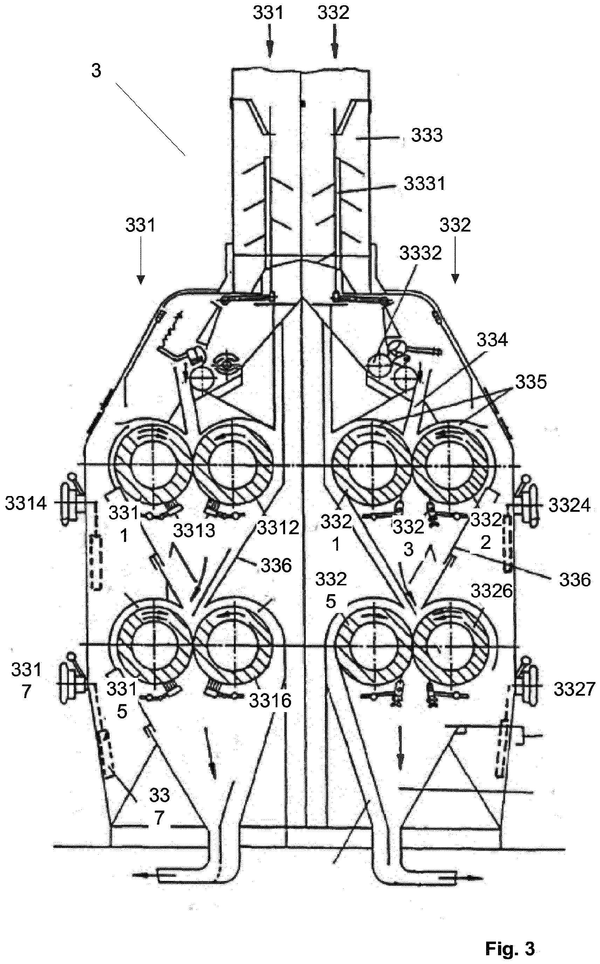

Figur 3 illustriert schematisch eine Darstellung eine Verarbeitungslinie 3 basierend auf einem Walzenstuhl 33 mit 8 Mahlwalzen, wie er im Stand der Technik bekannt ist. Ein solcher Achtwalzenstuhl 33 besteht z.B. aus zwei Hälften, mit einer linken Hälfte als Schrotpassage 331 und einer rechten Hälfte als Ausmahlpassage 332 ausgebildet. Die Schrotpassage 331 kann z.B. Riffelwalzen 3311/3312 umfassen, wobei in Figur 3 die schneller laufende Walze 3311 mit zwei Pfeilen markiert ist. Unterhalb der Walzen 3311 und 3312 befindet sich je eine Abstreifbürste 3313. Bei den Ausmahlpassagen 332 werden mehrheitlich glatte Walzen 3321 resp. 3322 und zur Sauberhaltung der Walzenoberflache Abstreifmesser 3323 verwendet. Je nach spezifischer Mahlarbeit wird das jeweils untere Walzenpaar 3315, 3316, bzw. 3325, 3326 die gleiche Walzengattung Grobriffel, Feinriffel oder als Glattwalzen ausgebildet sein, wie das entsprechende obere. Das Gut kann z.B. über entsprechende Einspeisezylinder 333 links oder rechts in den Walzenstuhl 33 geleitet werden. Dabei kann z.B. bei grossen Mühlenleistungen, die linke und die rechte Walzenstuhlhälfte identisch ausgeführt sein, sodass beide Hälften je die Hälfte des Mahlgutes verarbeiten. In dem Speisezylinder 333 kann z.B. ein Sensor 3331 ausgebildet, der eine Produktspeisung 3332 steuert, sodass eine jeweils ankommende Gutmenge, die oben beim Speisezylinder 333 zufliesst, in gleicher Grösse durch die Produktspeisung ausgetragen wird. Das Gut wird über einen Speisekanal 334 direkt in den Mahlspalt geleitet. Eine Luftströmung wird in dem Speisekanal 334 erzeugt, was z.B. durch zwei um die Walzen 3311, 3312 bzw. 3321, 3322 herumgeführte Luftkanäle 335 sichergestellt werden kann. Das vom oberen Walzenpaar 3311, 3312 geschrotete Gut wird über einen Produktabführtrichter 336 direkt in den Mahlspalt des unteren Walzenpaares 3315, 3316 geleitet. Auch beim unteren Walzenpaar 3315, 3316 wird die Luft durch Luftkanäle 335 aspiriert. Alle vier Walzenpaare 3311, 3312, 3315, 3316, 3321, 3322, 3325, 3326 können durch eine Einstellvorrichtung 3314 und 3317 bzw. 3324 und 3327 bezüglich des Mahlspaltes eingestellt werden. Alle übrigen Einrichtungen wie Fremdkörpersicherung, Ein- und Ausrückvorrichtung usw., können bei Achtwalzwerken z.B. wie bei Vierwalzwerken verwendet werden. In dem Produktabführtrichter kann zusätzlich eine Luftführung realisiert sein. Dies kann besonders bei dunst- und mehlartigen Mahlgütern Vorteile bringen, da durch getrennte Luft- und Produktführung eine kompaktere Führung des fallenden Produktstromes möglich ist. Jedes Mahlwalzenpaar 3311, 3312 - 3321, 3322 weist je eine eigene Mahlspaltverstelleinrichtung 3314, 3317, 3324, 3327 auf, welche z.B. aus einem Rad sowie den entsprechenden Verstellelementen besteht. Zusätzlich können ein oder mehrere Verstellmotoren 337 zum automatischen Verstellen der Mahlspaltverstelleinrichtungen 3314, 3317, 3324, 3327 vorgesehen sein. Über eine Anzeige kann z.B. der momentane Abstandswert von zwei Mahlwalzen überwacht werden. Ferner können die Verstellmotoren über eine Steuervorrichtung und Speichermittel automatisch erfolgen, wobei die beiden als integrierter Bestandteil des Kontrollsystem 20 der Betriebsvorrichtung realisiert sein können. Insbesondere können die Verstellmotoren 337 und damit die Mahlspaltverstelleinrichtungen 3314, 3317, 3324, 3327 ebenso wie die Produktesteuerung 3332 und die Sensoren 3331 als Verarbeitungseinheiten 31 und I/O Interfaces 32 mittels des Kontrollsystems der Betriebsvorrichtung 20 überwacht, gesteuert und automatisch geregelt sein.

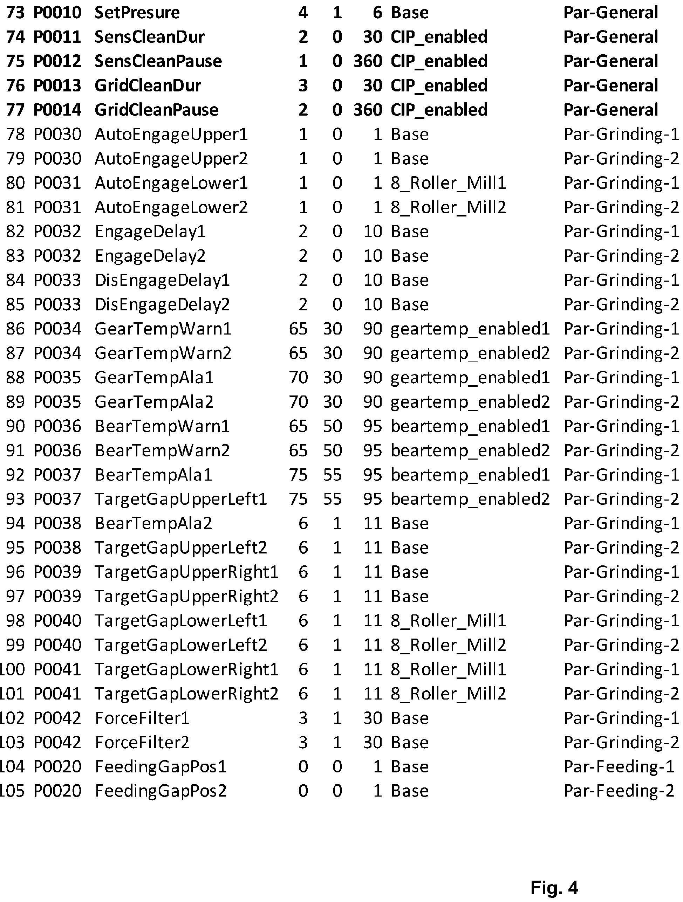

Figur 4 illustriert schematisch ein Auszug aus den "globalen", d.h. passagen-übergreifenden, sowie den passagen-spezifischen Parametern 43211,...,4321x/43221,...,4322x. Dunkelgrau sind passagen-übergreifend relevante Parameter 43221,...,4322x, hellgrau sind passagen-spezifische Parameter 43211,...,4321 x. Unter globalen oder passagen-übergreifenden Parameter 43221,...,4322xwerden im Folgenden Parameter verstanden, welche bei verschiedenen Verarbeitungslinien oder Passagen 3 mit den Verarbeitungsvorrichtungen 31, z.B. wegen ihre geographische Allokation oder vorrichtungsspezifische Äquivalenz, eine gleichen oder entsprechenden Einfluss haben. Erfindungsgemäss werden sie zentral durch die Regel- und Steuerungsvorrichtung 4 zum Generieren der Steuerung/Regelung und Überwachung mehrerer Verarbeitungslinien 3 verwendet. Im Vergleich dazu sind die passagen-spezifische Parameter 43211,...,4321x nur spezifisch für eine bestimmte Verarbeitungslinie 3 bzw. spezifisch für eine Verarbeitungsvorrichtungen 31 relevant.

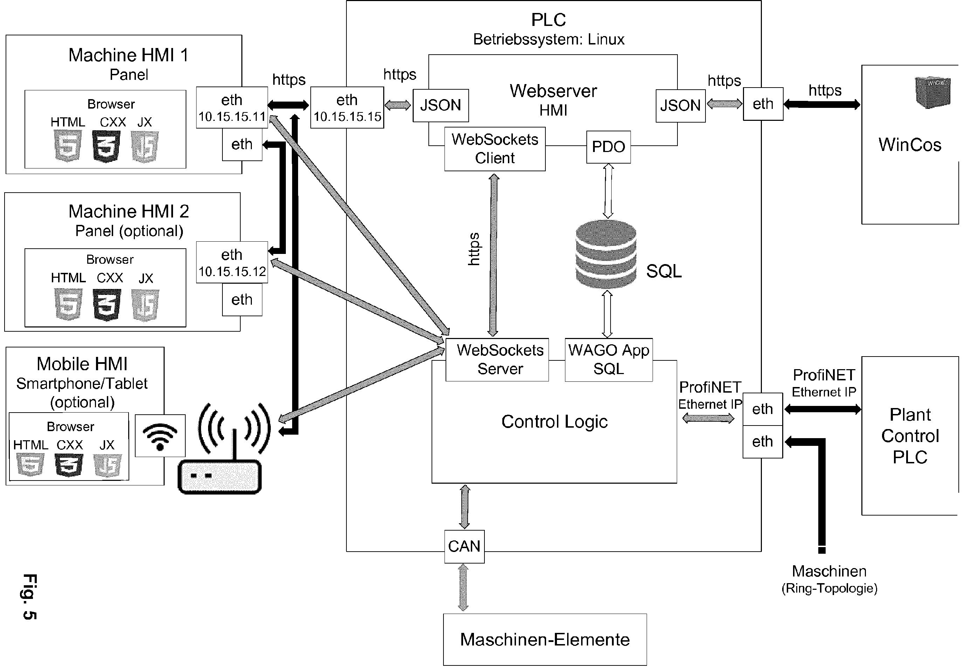

Figur 5 illustriert schematisch ein Blockdiagram einer erfindungsgemässen Ausführungsvariante mit einer mobilen Applikation mit Human-Machine Interface (HMI) Identifikation zur Remote-Bedienung von Maschinen ohne lokales Bedienpanel und den Remote-Zugriff mittels der mobilen App auf den Webserver zur Remote-Maschinensteuerung mittels der Steuervorrichtung 4. Die Steuervorrichtung 4 steuert zentral die Verarbeitungsvorrichtungen 31 verschiedene Passagen 3 gleicher oder verschiedener Mühlen 2 und/oder Verarbeitungsvorrichtungen 31 gleicher oder verschiedener Mahlanlagen 1 oder allgemein Anlagen der Prozessindustrie, indem sie die lokalen PLC 201 der Verarbeitungslinien 3 anspricht.

### Detaillierte Beschreibung der Erfindung

Figur 1 illustriert schematisch eine Darstellung einer erfindungsgemässen Ausführungsvariante, bei welcher z.B. die Passage oder Verarbeitungslinie 3 mit den Walzenstühlen (Bₓ/Cₓ) geregelt und/oder überwacht wird, hier beispielsweise weiter unterteilt in B Passage (hier: Riffelwalzen B₁ (Walzenpaar B₁₁, B₁₂),...,Bₓ (Bₓ₁Bₓ₂)) und C Passage (hier: Glattwalzen C₁ (Walzenpaar C₁₁/C₁₂),...,Cₓ). Solche Verarbeitungslinien oder Passagen 3 können z.B. auch andere Verarbeitungseinheiten 31 als Walzenstühle umfassen. Allgemein bezeichnen Passagen (auch Strang oder Durchlauf) die Produkteführung in einer Mühle, z.B. einer Getreidemüllerei. Dabei wird mit Walzenstühlen vermahlenes Getreide oder körniges Gut mit einem Plansichter gesiebt. Das Mehl wird abgesiebt und der Schrot wieder vermahlen bis alles Mehl herausgelöst wurde. Diese Produktführung (Mahlen und anschliessendes Sichten) wird hier als Passage bezeichnet. Das Getreide und das körnige Produkt kann (je nach Vermahlungsdiagramm) 10-16 Passagen durchlaufen. Die Erfindung bezieht sich jedoch allgemein auf prozessgesteuerten Verarbeitungslinien von Anlagen der Prozessindustrie. Als Anlagen der Prozessindustrie werden hierin Anlage zur industriellen Verarbeitung von Stoffe und Materialien in chemischen, physikalischen, biologischen oder anderen technischen Prozessen und Verfahren bezeichnet. Stoffe und Materialien werden dabei über die entsprechenden Verarbeitungslinien beispielsweise umgesetzt, geformt, vermischt oder entmischt, gegossen, gemahlen, gepresst, u. a. m. Einige typische Prozesse sind chemische Reaktionen und die Aufarbeitung der Reaktionsprodukte etwa durch Destillation oder Kristallisation, die Herstellung und Verarbeitung von Schokolade, die Erdöl-Aufbereitung etwa durch Rektifikation, das Schmelzen von Glas, aber auch Vermahlen von körnigem Gut (z.B. organisches Gut wie Getreide oder auch anorganisches Gut wie Steingut) oder das industrielle Backen von Brot oder Herstellen und Verarbeiten von Teig (z.B. industrielle Herstellung von Pasta) etc.

Die vorliegende Erfindung wird im Wesentlichen jedoch beispielshaft für andere Verarbeitungsanlagen anhand von Mühlenanlagen dargelegt. Die Referenznummer 1 bezeichnet die Mühlenanlage oder generell eine Verarbeitungsanlage umfassend ein oder mehrere Mühlen oder Betriebsvorrichtungen 2 (Plants) mit jeweils ein oder mehreren Verarbeitungslinien 3 zur industriellen Herstellung unterschiedlicher Mahlprodukten oder anderer mittels der Verarbeitungslinie verarbeiteter Produkte. Eine Verarbeitungslinie 3 kann z.B. mindestens eine Mahlpassage B, C mit Mahlwalzenpaaren B₁, B₂, ...,Bₓ: C₁, C₂,...,Cₓ zum Vermahlen eines Mahlgutes umfassen. Die Wahl der Mahl- oder Verkleinerungsanlage 1 kann bestimmt sein durch die messtechnische Charakterisierung des Ausgangsproduktes und/oder Endproduktes und/oder Mengenangaben zum Ausgangsprodukt. Insbesondere reichen bei der Wahl der Mahlanlage 1 häufig wenige Parameter, wie z.B. (i) ist das Produkt trocken, feucht oder nass, (ii) ist das Produkt hart, spröde oder plastisch, (iii) Partikelgrösse des Ausgangsproduktes, (iv) Feinheit des Endproduktes, (v) Produktedurchsatz, etc. Wie oben ausgeführt können mindestens eine Walze, insbesondere zwei Walzen 31 einer Mahlwalzenpaarung einer Mahlanlage 1 oder Verarbeitungslinie 3 beispielsweise als Glattwalze C₁, C₂,..., Cx oder als Riffelwalze B₁, B₂,..., Bx oder als Walzengrundkörper mit aufgeschraubten Platten ausgebildet sein. Glattwalzen C₁, C₂,..., Cx können zylindrisch oder bombiert sein. Riffelwalzen B₁, B₂,..., Bx können verschiedene Riffelgeometrien, wie z.B. dachförmigen oder trapezförmigen Riffelgeometrien, aufweisen und/oder an der Umfangsfläche aufgesetzte Segmente aufweisen. Mindestens eine Walze, insbesondere beide Walzen der Mahlwalzenpaarung, insbesondere mindestens eine Mahlwalze, insbesondere beide Mahlwalzen der Mahlwalzenpaarung, kann bzw. können eine Länge im Bereich 500 mm bis 2000 mm und einen Durchmesser im Bereich von 250 mm bis 300 mm aufweisen. Die Umfangsfläche der Walze, insbesondere der Mahlwalze, ist bevorzugt unlösbar mit dem Walzenkörper verbunden und insbesondere einstückig damit ausgebildet. Dies erlaubt eine einfache Herstellung und eine zuverlässige und robuste Verarbeitung, insbesondere Vermahlung, des Produktes. Die Walzen können mit mindestens einem Sensor zur Erfassung von Messwerten ausgebildet sein, die einen Zustand mindestens einer der Walzen, insbesondere beider Walzen der Walzenpaarung charakterisieren. Insbesondere kann es sich dabei um einen Zustand einer Umfangsfläche mindestens einer der Walzen, insbesondere beider Walzen der Walzenpaarung handeln. Der Zustand kann beispielsweise eine Temperatur, ein Druck, eine Kraft (Kraftkomponente(n) in einer oder mehreren Richtungen), ein Verschleiss, eine Vibration, eine Deformation (Ausdehnung und/oder Auslenkweg), eine Drehgeschwindigkeit, eine Drehbeschleunigung, eine Umgebungsfeuchtigkeit, eine Position oder eine Orientierung mindestens einer der Walzen, insbesondere beider Walzen der Walzenpaarung sein. Die Sensoren können beispielsweise als MEMS-Sensor ausgebildet sein (MEMS: Micro-Electro-Mechanical System). Bevorzugt steht der Sensor in Datenverbindung mit mindestens einem Datensender, wobei der Datensender zur berührungslosen Übertragung der Messwerte des mindestens einen Sensors an einen Datenempfänger ausgebildet ist. Die Messwerte können mit Hilfe des mindestens einen Datensenders berührungslos an einen Datenempfänger übertragen werden, der nicht Bestandteil der Walze ist. Die Mahlanlage kann weitere Sensoren und Messeinheiten umfassen zum Erfassen von Prozess- oder Produkte- oder Betriebsparametern, insbesondere Messvorrichtungen zum Messen der Strom-/Leistungsaufnahmen einer oder mehreren Walzen. Unter anderem können die Sensoren (i) mindestens ein Temperatursensor, bevorzugt aber mehrere Temperatursensoren zum Messen der Walzentemperatur oder eines Temperaturprofil entlang einer Walze; (ii) ein oder mehrere Drucksensoren; (iii) ein oder mehrere Kraftsensoren (zur Bestimmung der Kraftkomponente(n) in einer oder mehreren Richtungen); ein oder mehrere Verschleisssensoren; (iv) ein oder mehrere Vibrationssensoren, insbesondere zum Ermitteln eines Wickelns, also einer Anhaftung des verarbeiteten Produktes an der Umfangsfläche der Walze, was Verarbeiten, insbesondere Vermahlen, an dieser Position behindert; (v) ein oder mehrere Deformationssensoren (zur Bestimmung einer Ausdehnung und/oder eines Auslenkwegs); (vi) ein oder mehrere Drehgeschwindigkeitssensoren, insbesondere zum Ermitteln eines Stillstandes der Walze; (vii) ein oder mehrere Drehbeschleunigungssensoren; (viii) ein oder mehrere Sensoren zum Ermitteln einer Umgebungsfeuchtigkeit, der bevorzugt an einer Stirnseite der Walze angeordnet ist; (ix) ein oder mehrere gyroskopischer Sensoren zum Ermitteln der Position und/oder der Orientierung der Walze, insbesondere zum Ermitteln der von der Position und/oder der Orientierung abhängigen Breite eines Spaltes zwischen den beiden Walzen der Walzenpaarung sowie der Parallelität der Walzen; und/oder (x) ein oder mehrere Sensoren zum Ermitteln der Breite eines Spaltes zwischen den beiden Walzen der Walzenpaarung, insbesondere eines Mahlspaltes zwischen den beiden Mahlwalzen der Mahlwalzenpaarung, beispielsweise ein in einer Stirnseite der Walze angeordneter Sensors, insbesondere ein MEMS-Sensor. Beliebige Kombinationen davon sind ebenfalls möglich. Beispielsweise kann eine Walze mehrere Temperatursensoren und Deformationssensoren enthalten. Zudem ist es möglich und liegt im Rahmen der Erfindung, dass alle Sensoren vom gleichen Typ sind, also beispielsweise als Messeinheiten zum Messen der Leistungsaufnahme einer oder mehreren Walzen ausgebildet sind.

Weiter können die ein oder mehreren Verarbeitungslinien 3 mindestens eine nachgeordnete Siebpassage S₁,..., Sₓ zum Sichten oder Sieben des Mahlgutes umfassen. Mahlwalzen im Sinne der vorliegenden Erfindung sind dafür ausgelegt, körniges Mahlgut zu vermahlen, welches üblicherweise zwischen einer Mahlwalzenpaarung von zwei Mahlwalzen geführt wird. Mahlwalzen, insbesondere die Mahlwalzen der erfindungsgemässen Mahlwalzenpaarungen, verfügen üblicherweise über eine im Wesentlichen unelastische Oberfläche (insbesondere an ihrer Umfangsfläche), die zu diesem Zweck beispielsweise Metall enthalten kann oder daraus bestehen kann, wie etwa Stahl, insbesondere Edelstahl. Zwischen den Mahlwalzen der Mahlwalzenpaarung besteht üblicherweise ein relativ fester und häufig hydraulisch geregelter Mahlspalt. In vielen Mahlanlagen wird das Mahlgut im Wesentlichen vertikal abwärts durch einen solchen Mahlspalt geführt. Zudem wird das Mahlgut in vielen Mahlanlagen 3 den Mahlwalzen einer Mahlwalzenpaarung mittels seiner Schwerkraft zugeführt, wobei diese Zuführung optional pneumatisch unterstutzt werden kann. Das Mahlgut ist üblicherweise körnig und bewegt sich als Fluidstrom durch den Mahlspalt. Durch diese Eigenschaften unterscheiden sich eine Mahlwalze und eine mindestens eine solche Mahlwalze enthaltende Mahlanlage 3 beispielsweise von anderen in der Technik verwendeten Walzen, welche z.B. zum Transport von Papier verwendet werden.

Über eine Vermahlungslinie 3 wird ein spezifisches Mahlprodukt mit spezifischen Ausbeuteparametern und Mahlproduktparametern erzeugt. Diese Parameter hängen insbesondere von der Wahl der Mahlanlage 1 oder Verarbeitungsvorrichtung ab. Unter "Produkt" oder "Mahlgut" wird im Sinne der vorliegenden Erfindung insbesondere ein Schuttgut oder eine Masse verstanden. Unter "Schuttgut" wird im Sinne der vorliegenden Erfindung ein pulver-, granulat- oder pelletförmiges Produkt verstanden, welches bei der Schuttgut verarbeitenden Industrie, d. h. bei der Verarbeitung von Getreide, Getreidevermahlungsprodukten und Getreideendprodukten der Müllerei (insbesondere Vermahlen von Weichweizen, Durum, Roggen, Mais und/oder Gerste) oder Spezialmüllerei (insbesondere Schalen und/oder Vermahlen von Soja, Buchweizen, Gerste, Dinkel, Hirse/Sorghum, Pseudocerealien und/oder Hülsenfruchten), der Herstellung von Futter für Nutz- und Haustiere, Fische und Krustentiere, der Verarbeitung von Ölsaaten, der Verarbeitung von Biomasse und Herstellung von Energiepellets, industriellen Mälzerei und Schroterei-Anlagen; der Verarbeitung von Kakaobohnen, Nüssen und Kaffeebohnen, der Herstellung von Düngemitteln, in der Pharmaindustrie oder in der Feststoffchemie Einsatz findet. Unter "Masse" wird im Sinne der vorliegenden Erfindung eine Lebensmittelmasse, wie etwa eine Schokoladenmasse oder eine Zuckermasse, oder eine Druckfarbe, eine Beschichtung, ein Elektronikmaterial oder eine Chemikalie, insbesondere eine Feinchemikalie verstanden. Unter "Verarbeitung eines Produktes" wird im Sinne der vorliegenden Erfindung insbesondere Folgendes verstanden: (i) das Mahlen, Zerkleinern und/oder Flockieren von Schuttgut, insbesondere Getreide, Getreidevermahlungsprodukten und Getreideendprodukten der Müllerei oder Spezialmüllerei wie oben ausgeführt, wofür als Walzenpaarungen beispielsweise die weiter unten noch detaillierter beschriebenen Paarungen von Mahlwalzen oder Flockierwalzen eingesetzt werden können; (ii) die Verfeinerung von Massen, insbesondere von Lebensmittelmassen wie etwa Schokoladenmassen oder Zuckermassen, wofür beispielsweise Paarungen von Feinwalzen eingesetzt werden können; und (iii) das Nassmahlen und/oder Dispergieren, insbesondere von Druckfarben, Beschichtungen, Elektronikmaterialien oder Chemikalien, insbesondere Feinchemikalien.

Jede Betriebsvorrichtung oder Mühle 2 der Mühlenanlage 1 umfasst mindestens eine remote-ansprechbare, speicherprogrammierbare Steuerung 201 (auch PLC: Programmable Logic Controller) zur lokalen Steuerung und/oder Reglung von den Vermahlungslinien 3 zugeordneten Verarbeitungsvorrichtungen 31 /Bₓ/Cₓ/Sₓ über zugeordnete I/O Interfaces 32. Die Steuervorrichtung 4 steuert zentral, insbesondere z.B. web-basiert, die Verarbeitungsvorrichtungen 31 verschiedene Passagen 3 gleicher oder verschiedener Mühlen 2, indem sie die lokalen PLC 201 der Verarbeitungslinien 3 anspricht. Dabei werden passagen-spezifische 43211,...,4321x und global, d.h. passagen-übergreifenden 43221,...,4322x Parameter unterschieden und von der Steuervorrichtung 4 unterschiedlich gehandhabt (vgl. auch Figur 4 mit einem Auszug aus "globalen", d.h. passagen-übergreifenden, sowie passagen-spezifischen Parametern 43211,...,4321x/43221,...,4322x, wobei passagen-übergreifend relevante Parameter 43221,...,4322x dunkelgrau hinterlegt sind, während passagen-spezifische Parameter 43211,...,4321x hellgrau interlegt sind.). Unter globalen oder passagen-übergreifenden Parameter 43221,...,4322x werden Parameter verstanden, welche bei verschiedenen Verarbeitungslinien oder Passagen 3 mit den Verarbeitungsvorrichtungen 31, beispielsweise wegen ihre geographische Allokation oder vorrichtungsspezifische Äquivalenz, eine gleiche, entsprechende oder mindestens passagen-übergreifende Relevanz haben. Erfindungsgemäss werden sie zentral durch die Regel- und Steuerungsvorrichtung 4 zum Generieren der Steuerung/Regelung und Überwachung mehrerer Verarbeitungslinien 3 verwendet. Im Vergleich dazu sind die passagen-spezifische Parameter 43211,...,4321x nur spezifisch für eine bestimmte Verarbeitungslinie 3 bzw. spezifisch für eine Verarbeitungsvorrichtungen 31 relevant. Die speicherprogrammierbare Steuerungen 201/PLC sind bidirektional über Netzwerkinterfaces 202 mit der zentrale Regel- und Steuerungsvorrichtung 4 verbunden und mittels von der zentrale Regel- und Steuerungsvorrichtung 4 übertragenen Steuerparametern 4311,...,431x ansprechbar. Die Verarbeitungsvorrichtungen 31/B_{x/}Cₓ/Sₓ einer Verarbeitungslinie 3 werden basierend auf den übertragenen Steuerparametern 4311,...,431x der Regel- und Steuerungsvorrichtung 4 mittels den speicherprogrammierbare Steuerungen 201/PLC remote über die zugeordneten I/O Interfaces 32 angesteuert und im ihrem Betrieb einzeln lokal geregelt.

Die prozesstechnische Verknüpfung der Messparameter zur Charakterisierung des Ausgangsproduktes und/oder Endproduktes und/oder Mengenangaben zum Ausgangsprodukt und/oder Durchsatz etc. mit den durch die zentrale Regel- und Steuerungsvorrichtung 4 übertragenen Steuerparametern 4311,...,431x zur Steuerung der Verarbeitungsvorrichtungen 31/Bₓ/Cₓ/Sₓeiner Verarbeitungslinie 3, d.h. den passagen-spezifische 43211,...,4321x und global, d.h. passagen-übergreifenden 43221,...,4322x Parameter, kann z.B. mittels einer zuvor bestimmten Prozessfunktion erfolgen. Das heisst, die Prozessfunktion ist die technische, insbesondere z.B. zeitabhängige, Parametrisierung des Verarbeitungsprozesses einer spezifischen Mahlanlage 1 und/oder Verarbeitungslinie/Passage 3 und/oder Verarbeitungseinheit 31 während des Verarbeitungsprozesses und erlaubt einen technischen Zusammenhang herzustellen zwischen den den Verarbeitungsprozess beeinflussenden Parameter, wie z.B. Messparameter betreffend des Ausgangsproduktes (Feuchtigkeit, Körnigkeit etc.), Umwelteinflussparameter (Luftdruck, Temperatur etc.), Messparameter betreffend Zwischenprodukte während des Verarbeitungsprozesses sowie Betriebsparameter wie z.B. Energieaufnahme, Walzentemperatur, Drehgeschwindigkeit der Walzen, und Messparameter des Endproduktes (Mahlfeinheit, Körnigkeit, Durchsatz, etc.). Die Bestimmung der entsprechenden Prozessfunktion, mindestens die initial Bestimmung, kann für den jeweiligen Typ einer Mahlanlage 1 z.B. experimentell mittels einer konkreten Mahlanlage erfolgen, da es häufig schwierig ist, das Zerkleinerungsverhalten eindeutig zu charakterisieren und/oder die Auswirkungen von Prozessparametern auf die Partikeleigenschaften vorherzusagen. Zum Beispiel ist es meist schwierig, Durchsatz, Drehzahl/spezifische Energie oder geometrische Parameter der Mühle mit den Dispersitätseigenschaften des Endproduktes über Abbildungsfunktionen zu verbinden. Die Prozessfunktion sollte dabei auf möglichst allen prozessrelevanten Grössen und Parameter basieren, insbesondere die zulässigen Bandbreiten der Prozessparameter und Steuerparametern 4311,...,431x, innerhalb welcher ein sicherer Betrieb der Mahlanlage 1 bzw. der Verarbeitungsvorrichtung gewährleistet ist. Die experimentellen, messtechnischen Grössen zur Bestimmung der Prozessfunktion können z.B. Partikelgrössenverteilung innerhalb der Verarbeitungslinie 3, Einfluss von Drehzahl, Durchsatz, Einfluss von Mahlkörperdichte und Grösse auf Partikelgrössenverteilung sein. Die Prozessfunktion kann dabei z.B. für alle Prozessstufen der Prozesskette der Verarbeitungslinie 3 bestimmt werden, um die integrale Prozessfunktion der Mahlanlage 1 zu erhalten.

Die zentrale Steuerung 4 der Passagenvorrichtungen 31 kann insbesondere auf Web-Technologie, d.h. dezentralen Netzwerktechnologien basieren, welche kollektive Parameterveränderungen sowie kollektive Softwareupdates über beliebig viele Passagen 3 web- und/oder netzbasiert ermöglicht, sowie die Interkonnektivität zu diversen Endgeräten bereitstellt. Die kollektive Parameterveränderungen sowie kollektive Softwareupdates über beliebig viele Passagen 3, sowie die Interkonnektivität zu diversen Passagenvorrichtungen 31 als Endgeräte sind Vorteile der erfindungsgemäss zentral ausgebildeten Steuerung der Passagenvorrichtungen 31. Passagen-übergreifenden Parameter 43221,...,4322x sind der Betriebsregelung von Batch/Charge in mehreren Verarbeitungslinie/Passage 3 zugeordnet, sind jedoch im Gegensatz zu den passagen-spezifischen Parametern 43211,...,4321x nicht an eine einzelne bestimmte Verarbeitungslinie/Passage 3 gebunden. Passagen-übergreifenden Parameter 43221,...,4322x können direkt Messparameter von entsprechenden Messvorrichtungen oder Sensoren sein, oder durch entsprechende Verknüpfung oder Modellen aus anderen passagen-übergreifenden Parameter 43221,...,4322x und/oder passagen-spezifischen Parametern 43211,...,4321x generiert sein.

Eine mögliche Ausführungsvariante, in welcher die Regel- und Steuerungsvorrichtung 4 über ein Interface 42 mit dem weltweiten Backbone-Netzwerk, d.h. dem Internet, und/oder einem Intranet verbunden ist, zeigt z.B. Figur 2. Die Regel- und Steuerungsvorrichtung 4 ist mittels des Netzwerkinterface 42 über ein Datenübertragungsnetzwerk 41 und dem Network Interface 202 mit dem Kontrollsystem der Betriebsvorrichtung (Plant Control System) 20 verbunden. Eine Web-Server Applikation 46 stellt die gewünschten Anzeige- und Input/Output-Möglichkeiten und/oder Kontroll-/Überwachungsseiten 721/722 für einen Remote-Client 7 oder Browser zur Verfügung, wobei der Remote-Client 72 mittels des Netzwerkinterface 71 mit dem Netzwerk 41 verbunden ist. Die Regel- und Steuerungsvorrichtung 4 stellt zudem die notwendigen Datendienste oder Schnittstellen bereit, um den Datenaustausch zwischen der lokalen Regel- und Steuerungsvorrichtung 4 als Machine/Process Server und dem remote System 7 als Client zu ermöglichen. In dieser Ausführungsvariante ist als einzige Voraussetzung für ein Remote-Viewing der Daten und/oder Webseiten des Web-Server 46 ein Standard-Browser Interface notwendig.

Diese Ausführungsvariante kann als eine mobile Applikation für den Zugriff auf den Webserver Applikation 46 zur Maschinensteuerung realisiert sein. Die Nutzung kann z.B. auf das LAN (Local Area Network) beschränkt sein, in welchem die Anlange 1 angeschlossen sind. Darüber hinaus kann die mobile Applikation remote das Netzwerk nach zugänglichen Steuerungen durchsuchen und Analgen 1 mit kompatiblen Maschinensteuerungen selektieren. Dazu kann z.B. ein User Datagram Protocol (UDP) Broadcast genutzt werden, wobei die Maschinensteuerung dauerhaft auf einer spezifischen Adresse (255.255.255.250) auf eingehende UDP Nachrichten wartet. Sobald ein Smartphone z.B. über die installierte mobile App einen entsprechenden ANLAGEN_PLC_DISCOVERY Broadcast sendet, empfangen alle Steuerungen in diesem Netz diesen Broadcast und antworten mit den gewünschten Properties, wie im folgendes Beispiel gezeigt:

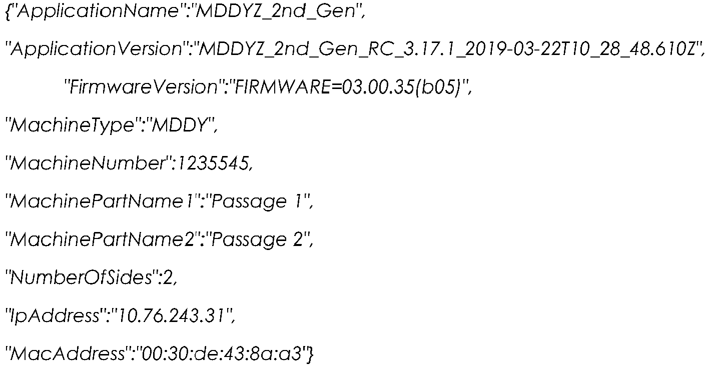

Die Maschinensteuerungsanbindung kann z.B. mittels eines softwarebasierten Engine realisiert sein (siehe Figur 5), z.B. auch mittels kommerziellen Engines wie der Phoenix Engine. Phoenix Engine ist ein Software-Framework bestehend aus einer Wago PLC mit Embedded Linux und einer Codesys Runtime. Der Webserver und eine zusätzlich können integriert sein. Die Datenbank bildet die zentrale Schnittstelle zwischen der Maschinensteuerungssoftware und der generischen webbasierten Visualisierung. Die Verbindung zwischen dem Webserver und der Maschinensteuerungssoftware kann z.B. durch eine direkte Verbindung mittels Websockets realisiert sein. Die Visualisierung kann in dieser Ausführungsvariante so mit jedem herkömmlichen Browser auf einem Touch Display, Smartphone, PC bedient werden. Figur 5 zeigt eine erfindungsgemässen Ausführungsvariante mit einer solchen mobilen Applikation mit Human-Machine Interface (HMI) Identifikation zur Remote-Bedienung von Maschinen ohne lokales Bedienpanel und den Remote-Zugriff mittels der mobilen App auf den Webserver zur Remote-Maschinensteuerung mittels der Steuervorrichtung 4 (Control Logic). Die Steuervorrichtung 4 steuert zentral die Verarbeitungsvorrichtungen 31 (Machine Elements) über einen PLC verschiedene Passagen 3 gleicher oder verschiedener Mühlen 2 und/oder Verarbeitungsvorrichtungen 31 gleicher oder verschiedener Mahlanlagen 1 oder allgemein Anlagen der Prozessindustrie, indem sie die lokalen PLC 201 der Verarbeitungslinien 3 anspricht. Die remote Steuerung mehrerer Mahlanlagen 1 und/oder Verarbeitungslinien 3 mittels der zentrale Steuervorrichtung 4, insbesondere Mahlanlagen 1 und/oder Verarbeitungslinien 3 an geographisch vergleichbaren Standorten, die gleiche oder ähnliche kollektive Parameter, z.B. Umweltparameter wie Luftdruck, Luftfeuchtigkeit etc. aufweisen, erlaubt kollektive Parameteranpassungen insbesondere der auf das Plant Control System 20 bzw. die PLCs 201 übertragenen Steuerparameter 4311,...,431x, sowie kollektive Steuerung und kollektive Softwareupdates über beliebig viele Verarbeitungslinien und Passagen 3. Zudem erlaubt dies eine neue Art von Interkonnektivität zu diversen Endgeräten. Die hierin beschriebene Web-Technologie kann dabei als Basis dienen, so dass ein zusätzliches Grad an Unabhängigkeit erreicht werden kann. Es ist anzufügen, dass die kollektiven, d.h. globalen, Parameter sich auch nur auf Vorrichtungselemente in einer Verarbeitungslinie oder Passage 3 beziehen können, wie z.B. das Steuern durch kollektive Parameter Anpassung von zwei Walzen eines Walzenpaares in einer Mahlpassage 33, wie z.B. in einer Schrotpassage 331 oder Auswahlpassage 332.

Wird eine speicherprogrammierbare Steuerung (SPS, Programmable Logic Controller (PLC)) 201 im Kontrollsystem 20 der Betriebsvorrichtung 2, z.B. der Mühle, eine Optimierung, oder etwa unternehmensspezifische Steuersoftware für den real-time Datenaustausch mit dem Kontrollsystem 20 verwendet, werden kompatible Datenaustauschdienste benötigt. Z.B. kann der PLC 201 mittels einem Control Client (z.B. OPC UA Client) und einem entsprechenden Interpreter der Regel- und Steuerungsvorrichtung 4 über ein entsprechendes Protokoll (z.B. OPC UA) standardisiert oder proprietär ansprechbar sein. In dieser Ausführungsvariante stellt der Web-Server/Datendienst 46 (z.B. als Thin Server realisiert) die Verbindung zwischen der Betriebsvorrichtung 2 (z.B. als Thin Client 7 realisiert) bzw. Prozess und dem Internet bereit. Der PLC 201 oder ein proprietärer Controller umfassen das Plant Control System 20 mittels welchem die Verarbeitungseinheiten 31 der Verarbeitungslinie 3 steuern und/oder regeln lassen. Die meisten PLCs, wie z.B. PLC von AB, Schneider/Modicon, oder Siemens, unterstützen mindestens eine serielle Verbindung mit entsprechenden Kommunikationsprotokollen der PLC-Hersteller oder Drittanbieter. Typischerweise werden die zugehörigen Datentransfer-Treiber von den Thin Server 46 -Hersteller als embedded Softwareapplikationen bereitgestellt. Für bestimmte Ausführungsvarianten, welche PLCs, Optimierungen oder firmen-spezifische Software/Protokolle für den Datenaustausch in Echtzeit benötigen, kann ein entsprechender Remote-Server und kompatible Datenaustauschdienste notwendig sein. In der Ausführungsvariante gemäss Figur 2, ein Web-Server/Datendienstvorrichtung (Thin Server, 46) stellt die Verbindung zwischen der Vorrichtung 3 bzw. Prozess und dem Internet her. Typischerweise wird hier eine Verbindung zwischen den PLCs 201 oder einem proprietären Controller 201 bzw. dem Kontrollsystem 20 benötigt, um Daten 20 von Kontrollsystem zu extrahieren bzw. die notwendige Steuerung des Kontrollsystems 20 über das Netzwerk 41 zu ermöglichen. Viele PLCs, wie z.B. diese von Schneider/Modicon oder Siemens etc. unterstützen mindestens eine serielle Verbindung basierend auf Kommunikationsprotokollen des PLC-Anbieters oder Dritthersteller. Häufig ist auch ein entsprechender Treiber für die Kommunikation vom Anbieter des Thin-Servers 46 als Teil einer embedded Software-Applikation verfügbar. Benutzen die PLCs 201 standard PLC-Protokolle, vereinfacht dies die Anbindung des Thin Servers 46. Hat eine Verarbeitungseinheit 31 einen Kontroller, der über keinen externen Kommunikations-Port verfügt, kann es notwendig sein, die Verarbeitungseinheit 31 mit zusätzlichen Sensoren und I/O Interfaces 32 zu versehen. Ist der Thin Server 46 installiert und ein entsprechender Treiber ausgewählt, wird der Thin Server 46 konfiguriert, so dass die Daten der Verarbeitungseinheiten 31 und des Kontrollsystem 20 über einen Netzwerk-Link verfügen. Z.B. kann ein Gateway Server die PLC Register auf Netzwerkvariablen oder eine remote PC Verbindung abbilden. Vorteilhafterweise erlaubt der Thin Server 46 eine Web-Seite zu konfigurieren, um Daten der Verarbeitungseinheit 31 zu überwachen, oder standard Dateninterfaces wie OPC bereitzustellen. Die Internet oder Intranet (LAN) Verbindung zum Thin Server 46 kann z.B. Standard Ethernet, Modem-Dial-Up Linien oder drahtlose (wireless) Verbindungen (z.B. 802.11b Ethernet) umfassen. Über die Netzwerkanbindung (z.B. Internet) kann ein PC-Browser (Desktop-PC, Laptop, PDA oder ein anderer Thin Client 7) Zugriff auf die entsprechende Web-Page des Thin Servers 46 erhalten. Über diese Web-Page, welche vom Thin Server 46 bereitgestellt wird, kann nun über den Browser die Regel- und Steuerungsvorrichtung 4 und/oder das Kontrollsystem 20 bzw. die Steuerung der Verarbeitungseinheiten 31 über die PLCs überwacht oder deren Steuerung angepasst werden. Mittels der erfindungsgemässen Vorrichtung 1 ist es somit möglich, über die zentrale Regel- und Steuerungsvorrichtung 4 eine einheitliche web-basierte Überwachung verschiedener Vermahlungslinie bereitzustellen, mittels welcher die Mühlenanlage 1 zentral überwacht und/oder optimiert gesteuert wird. Als Ausführungsvariante kann ein Überwachungs- oder Kontrolldisplay 21/45 des Kontrollsystems 20 der Betriebsvorrichtung 2 und/oder der Regel- und Steuerungsvorrichtung 4 einen Annäherungssensor und/oder Bewegungssensors 211/451)umfasst, wobei das Display automatisch an- und ausgeschaltet wird in Abhängigkeit der Messergebnisse des Annäherungssensors und/oder Bewegungssenors basierend auf der gemessenen Distanz zu einem Operator der Mahlanlage (1) und/oder der Mühle 2.

Die remote Steuerung und Regelung der Verarbeitungsvorrichtungen 31/B_{x/}Cₓ/Sₓ von lokalen Maschinenprozesse der Verarbeitungsvorrichtungen 31/Bₓ/Cₓ/Sₓ mittels der Regel- und Steuerungsvorrichtung 4 in Echtzeit(real-time)-Datenaustausch erfolgt. Insbesondere kann die Regel- und Steuerungsvorrichtung 4, wie oben beschreiben, das Netzwerkinterface 42 umfassen. Über das Netzwerkinterface 42 kann auf das Kontrollsystem 20 der Mühle 2 mit den speicherprogrammierbare Steuerungen 201/PLC und den Netzwerkinterfaces 202 von der Regel- und Steuerungsvorrichtung 4 aus zugegriffen werden. Die zentrale Regel- und Steuerungsvorrichtung 4 kann entsprechende Mittel und Datenverarbeitungsprozesse 44 zum Generieren der zu übertragenden Steuerparameter 4311,...,431x in Abhängigkeit von passagen-spezifischen 43211,...,4321x und/oder passagen-übergreifenden 43221,...,4322x Batch-/Chargen-Parameter 432 umfassen. Dabei kann erfindungsgemäss mittel mindestens einem der Steuerparameter 4311,...,431x basierend auf einem oder mehreren der passagen-spezifische und/oder umgebungsspezifischen Parametern 432 verschiedene Vermahlungslinien 3 mit zugeordneten Verarbeitungsvorrichtungen 31/B_{x/}Cₓ/Sₓ über die Regel- und Steuerungsvorrichtung 4 zentral optimiert und/oder einheitlich regelt sein. Mindestens können die Steuerparameter 4311,...,431x mittels der Regel- und Steuerungsvorrichtung 4 basierend auf den passagen-übergreifenden Parameter 43221,...,4322x global für mindestens zwei unterschiedliche Verarbeitungslinien oder Passagen 3 optimiert und geregelt werden, während die passagen-spezifischen Parameter 43211,...,4321x unabhängig auf Optimierung und Regelung der Steuerparameter 4311,...,431x der jeweilige Passage 3 wirken. Die passagen-übergreifenden Parameter 43221,...,4322x ortsabhängige Messparameter können mindestens Luftfeuchtigkeit und/oder Luftdruck und/oder Umgebungstemperatur umfassen. Die passagen-spezifischen Parameter 43211,...,4321x können mindestens lokale Betriebsparameter der Verarbeitungsvorrichtungen 31/Bₓ/Cₓ/Sₓ, wie z.B. Energieverbrauch der Mahlwalzenpaaren B₁, B₂, ..., Bₓ; C₁, C₂, ..., Cₓ)und/oder Vordruck und/oder Eintrittstemperatur des Mahlgutes umfassen. Die passagen-spezifischen Messparameter 43211,...,4321x können auch mindestens Messparameter betreffend der Ströme und/oder Leistungsaufnahme eines oder mehrerer Walzenstühle 31 der Mühlenanlage 1 umfassen.

Zur Optimierung kann die zentrale Regel- und Steuerungsvorrichtung 4 operative Prozessrezepte 431 umfasst, wobei basierend auf einem operativen Prozessrezept 431 eine Batch-/Chargen-Steuerung mit einer definierten Verarbeitungsfolge der Verarbeitungseinheiten 31/B_{x/}Cₓ/Sₓ einer der Vermahlungslinie 3 geregelt wird, und wobei basierend auf dem operativen Prozessrezept 431 aus einem oder mehreren Eingangsstoffen 5 mit spezifischen Eigenschaftsparametern 51 eine definierte Menge eines Endproduktes 6 mit spezifischen Eigenschaftsparameter 61 erzeugt wird. Die definierten Eigenschaftsparameter 61 des Endproduktes 61 können mindestens Partikelgrössenverteilung 611 und/oder Stärkebeschädigung 612 und/oder Proteinqualität 613 und/oder Wassergehalt 614 umfassen. Während des Vermahlungsprozesses eines operativen Prozessrezeptes 431 werden die operativen Steuerparameter 4311,...,431x)und/oder die Batch-/Chargen-Parameter 432)mittels der Regel- und Steuerungsvorrichtung 4 kontinuierlich überwacht. Die überwachten, operativen Steuerparameter 4311,...,431x und/oder die Batch-/Chargen-Parameter 432 können z.B. mindestens Ausbeute 62 und/oder Energieaufnahme/-verbrach und/oder Durchsatz/Maschinenlaufzeit umfassen. Wird eine definierbaren Parameterwertschwankung oder Anomalie als definierte Abweichung der überwachten Steuerparameter 4311,...,431x detektiert und/oder weichen die Batch-/Chargen-Parameter 432 vom definierten Steuerparameter 4311,...,431x und/oder die Batch-/Chargen-Parameter 432, werden die Steuerparameter 4311,...,431x automatisiert mittels der Regel- und Steuerungsvorrichtung 4 korrigiert und/oder angepasst. Mittels prozess-typischer operativer Steuerparameter 4311,...,431x eines optimierten Batch-/Chargen-Prozesses im Normbereich können z.B. definierte Qualitätsparameter des Endproduktes 6 und spezifische Mehlausbeute 62 in Abhängigkeit vom den Eingangsprodukten 5 bestimmt werden oder vordefiniert sein.

Während des Vermahlungsprozesses eines operativen Prozessrezeptes werden die operativen Steuerparameter mittels der Regel- und Steuerungsvorrichtung kontinuierlich überwacht, wobei bei der Detektion einer Anomalie als definierte Abweichung der überwachten operativen Prozessparameter vom den bestimmten operativen Prozessparametern des neuen operativen Prozessrezeptes ein Warnsignal z.B. auf eine Alarmeinheit übertragen wird. Die Batch-/Chargen-Parameter können z.B. mindestens die Ströme eines oder mehrerer Walzenstühle der Mühlenanlage umfassen. Die ein oder mehreren Walzenstühle können z.B. mindestens Riffelwalzen (B Passage) und/oder Glattwalzen (C Passage) umfassen. Die Batch-/Chargen-Prozessparameter können z.B. mindestens die Ströme aller Walzenstühle der Mühlenanlage umfassen. Mittels der prozess-typischen Batch-/Chargen-Prozessparameter eines optimierten Batch-/Chargen-Prozesses im Normbereich können z.B. definierte Qualitätsparameter des Endproduktes und spezifische Mehlausbeute in Abhängigkeit vom den Ausgangsprodukten bestimmt werden. Die definierten Qualitätsparameter können z.B. mindestens Partikelgrössenverteilung und/oder Stärkebeschädigung und/oder Proteinqualität und/oder Wassergehalt umfassen. Die überwachten Batch-/Chargen-Prozessparametern können z.B. mindestens Ausbeute und/oder Energieaufnahme/- verbrach und/oder Durchsatz/Maschinenlaufzeit umfassen. Während des Vermahlungsprozesses können z.B. bei der Detektion von Anomalie kontinuierliche Langzeit-Veränderungen bei den überwachten Batch-/Chargen-Prozessparametern von der Regel- und Steuerungsvorrichtung erfasst werden, wobei die definierte Abweichung der überwachten operativen Steuerparametern vom den generierten operativen Steuerparametern Prozessrezeptes in Abhängigkeit der gemessenen kontinuierlichen Langzeit-Veränderungen bestimmt wird. Die überwachten Batch-/Chargen-Prozessparametern können z.B. von einer Vielzahl von erfindungsgemässen Kontrollsystemen 20 über das Netzwerk 41 an die zentrale Regel- und Steuerungsvorrichtung 4 übermittelt werden, wobei die Vielzahl von Kontrollsystemen 20 zentral überwacht und geregelt werden. U.a. hat die Erfindung den Vorteil, dass sie auf eine technisch neue Art die zentral überwachte und gesteuerte Identifikation von Langzeit- oder Kurzzeit-Trends in der Produktion, das automatisierte Erkennen von Auffälligkeiten, die automatisierte 24/7 (Fern) Überwachung und Erkennung der Produktionsparameter für (i) Ausbeute, (ii) Energie, und (iii) Durchsatz / Maschinenlaufzeit etc. erlaubt.

### Referenzliste

- 1: Mühlenanlage oder allgemein Anlagen der Prozessindustrie
- 2: Betriebsvorrichtung (Plant), Mühle
20 Kontrollsystem der Betriebsvorrichtung (Plant Control System)
201 Programmable logic controllers (PLC)
202 Network Interface des Plant Control System
203 Control Client (e.g. OPC UA client)
204 Interpreter
21 Überwachungs- oder Kontrolldisplay der Betriebsvorrichtung 2
211 Annäherungssensor und/oder Bewegungssensors

- 3: Verarbeitungslinie/Passage
31 Verarbeitungseinheiten
B₁, B₂,..., Bx Riffelwalzen
C₁, C₂,..., Cx Glattwalzen
S₁,S₂,..., Sx Sicht-/ Siebvorrichtungen
32 I/O Interfaces; Interlocked Elements
33 Ausführungsbeispiel eines Walzenstuhls mit einer Achtwalzenpassage
331 Schrotpassage
3311/3312 Riffelwalzen der Schrotpassage
3313 Abstreifbürste
3314 Einstellvorrichtung zum Einstellen des Mahlspaltes
3315/3316 Unteres Walzenpaar der Schrotpassage
3317 Einstellvorrichtung zum Einstellen des Mahlspaltes
332 Ausmahlpassage
3321/3322 Glattwalzen der Auswahlpassage
3323 Abstreifmesser
3324 Einstellvorrichtung zum Einstellen des Mahlspaltes
3325/3326 Unteres Walzenpaar der Auswahlpassage
3327 Einstellvorrichtung zum Einstellen des Mahlspaltes
333 Einspeisezylinder
3331 Sensor
3332 Produktesteuerung
334 Speisekanal
335 Luftkanäle
336 Produktabführtrichter
337 Verstellmotor
4 Regel- und Steuerungsvorrichtung
41 Datenübertragungsnetzwerk (Data Transmission Network)
42 Network Interface der Regel- und Steuerungsvorrichtung
43 Parameter
431 Operatives Prozessrezept
4311,...,431x Steuerparameter
432 Batch-/Chargen-Parameter
43211,...,4321x Passagen-spezifische Parameter
43221,...,4322x Passagen-übergreifenden Parameter
44 Mittel zum Generieren der Steuerparameter 4311,...,431x
45 Überwachungs- oder Kontrolldisplay der Regel- und Steuerungsvorrichtung 4
451 Annäherungssensor und/oder Bewegungssensors
46 Network Data Service/Web Server/Thin Server
47 Machine/Process Control
5 Eingangsprodukte
51 Messparameter des Eingangsstoffes
6 Endprodukte
61 Messparameter des Endproduktes
611 Partikelgrössenverteilung
612 Stärkebeschädigung
613 Proteinqualität
614 Wassergehalt
62 Spezifische Ausbeute
7 Web-basierter Control-Client/Thin Client
71 Network Interface
72 Browser Interface
721 Controlling/Steering der Betriebsvorrichtung/Mühlenanlage
722 Monitoring/Überwachung Betriebsvorrichtung/Mühlenanlage

## Patentansprüche

1. Mühlenanlage (1) umfassend ein oder mehrere Mühlen (2) mit ein oder mehreren Verarbeitungslinien (3) zur industriellen Herstellung einer Vielzahl von Mahlprodukten, wobei eine Verarbeitungslinie (3) mindestens eine Mahlpassage (B, C) mit Mahlwalzenpaaren (B₁, B₂, Bₓ; C₁, C₂, Cₓ) zum Vermahlen eines Mahlgutes und mindestens eine nachgeordnete Siebpassage (S) zum Sichten oder Sieben des Mahlgutes umfasst, wobei über die Verarbeitungslinien (3) ein spezifisches Mahlprodukt mit spezifischen Ausbeuteparametern und Mahlproduktparametern erzeugbar ist und wobei jede Mühle (2) der Mühlenanlage (1) mindestens eine speicherprogrammierbare Steuerung (201/PLC) zur lokalen Steuerung und/oder Reglung von den den Verarbeitungslinien (3) zugeordneten Verarbeitungsvorrichtungen (31; Bₓ/Cₓ/Sₓ) über zugeordnete I/O Interfaces (32) umfasst, **dadurch gekennzeichnet,**
**dass** die Mühlenanlage (1) eine zentrale Regel- und Steuerungsvorrichtung (4) zur optimierten Steuerung der Mühlenanlage (1) umfasst, wobei die speicherprogrammierbare Steuerungen (201/PLC) bidirektional über Netzwerkinterfaces (202) mit der zentrale Regel- und Steuerungsvorrichtung (4) verbunden und mittels von der zentrale Regel- und Steuerungsvorrichtung (4) übertragenen Steuerparametern (4311,...,431x) ansprechbar sind und wobei die Verarbeitungsvorrichtungen (31; B_{x/}Cₓ/Sₓ) einer Verarbeitungslinie (3) basierend auf den übertragenen Steuerparametern (4311,...,431x) der Regel- und Steuerungsvorrichtung (4) mittels den speicherprogrammierbaren Steuerungen (201/PLC) remote über die zugeordneten I/O Interfaces (32) ansteuerbar und im ihrem Betrieb einzeln lokal regelbar sind,
**dass** die zentrale Regel- und Steuerungsvorrichtung (4) Mittel (44) zum Generieren der zu übertragenden Steuerparameter (4311,...,431x) in Abhängigkeit von passagen-spezifischen (43211,...,4321x) und/oder passagen-übergreifenden (43221,...,4322x) Batch-/Chargen-Parameter (432) umfasst, wobei die passagen-übergreifenden Parameter (43221,...,4322x) Parameter mit gleicher oder entsprechender Relevanz bei verschiedenen Verarbeitungslinien (3) mit den Verarbeitungsvorrichtungen (31) umfassen, und zentral durch die Regel- und Steuerungsvorrichtung 4 zum Generieren der Steuerung/Regelung und Überwachung mehrerer Verarbeitungslinien 3 verwendbar sind, und wobei die passagen-spezifische Parameter (43211,...,4321x) Parameter mit nur spezifischer Relevanz für eine bestimmte Verarbeitungslinie (3) oder spezifisch für eine Verarbeitungsvorrichtungen (31) umfassen,
**dass** mittels mindestens einem der Steuerparameter (4311,...,431x) basierend auf einem oder mehreren der passagen-spezifische und/oder passagen-übergreifenden Parametern (432) verschiedene Verarbeitungslinien (3) mit zugeordneten Verarbeitungsvorrichtungen (31; B_{x/}Cₓ/Sₓ) mittels der Regel- und Steuerungsvorrichtung (4) zentral optimierbar und/oder einheitlich regelbar sind, wobei mittels der Regel- und Steuerungsvorrichtung (4) die passagen-übergreifenden Parameter (43221,...,4322x) global, vorrichtungs-übergreifend für mindestens zwei der Verarbeitungslinien (3) optimierbar und regelbar sind, während mittels der Regel- und Steuerungsvorrichtung (4) die passagen-spezifischen Parameter unabhängig auf die jeweilige Verarbeitungslinie (3) bezogen optimierbar und regelbar sind.

2. Mühlenanlage (1) nach Anspruch 1, **dadurch gekennzeichnet, dass** die remote Steuerung und Regelung der Verarbeitungsvorrichtungen (31; B_{x/}Cₓ/Sₓ) von lokalen Maschinenprozessen der Verarbeitungsvorrichtungen (31; B_{x/}Cₓ/Sₓ) mittels der Regel- und Steuerungsvorrichtung (4) in Echtzeit(real-time)-Datenaustausch erfolgt.

3. Mühlenanlage (1) nach einem der Ansprüche 1 oder 2, **dadurch gekennzeichnet, dass** die Regel- und Steuerungsvorrichtung (4) ein Netzwerkinterface (42) umfasst, mittels welchem ein Kontrollsystem (20) der Mühle (2) umfassend die speicherprogrammierbare Steuerungen (201/PLC) und die Netzwerkinterfaces (202) von der Regel- und Steuerungsvorrichtung (4) zugreifbar ist, und die zentrale Regel- und Steuerungsvorrichtung (4) Mittel (44) zum Generieren der zu übertragenden Steuerparameter (4311,...,431x) in Abhängigkeit von passagen-spezifischen (43211,...,4321x) und/oder passagen-übergreifenden (43221,...,4322x) Batch-/Chargen-Parameter (432) umfasst, wobei mittels mindestens einem der Steuerparameter (4311,...,431x) basierend auf einem oder mehreren der passagen-spezifische und/oder umgebungsspezifischen Parametern (432) verschiedene Verarbeitungslinien (3) mit zugeordneten Verarbeitungsvorrichtungen (31; B_{x/}Cₓ/Sₓ) mittels der Regel- und Steuerungsvorrichtung (4) zentral optimierbar und/oder einheitlich regelbar sind.

4. Mühlenanlage (1) nach Anspruch 3, **dadurch gekennzeichnet, dass** die passagen-übergreifenden Parameter (43221,...,4322x) ortsabhängige Messparameter umfassend Luftfeuchtigkeit und/oder Luftdruck und/oder Umgebungstemperatur umfassen und die passagen-spezifischen Parameter (43211,...,4321x) lokale Betriebsparameter der Verarbeitungsvorrichtungen (31; Bx/Cx/Sx) umfassend Energieverbrauch der Mahlwalzenpaaren (B₁, B₂, ..., Bₓ; C₁, C₂, ..., Cₓ) und/oder Vordruck und/oder Eintrittstemperatur des Mahlgutes umfassen.

5. Mühlenanlage (1) nach einem der Ansprüche 3 oder 4, **dadurch gekennzeichnet, dass** mittels der Regel- und Steuerungsvorrichtung (4) die passagen-übergreifenden Parameter (43221,...,4322x) global für mindestens zwei Mahlpassagen optimiert und geregelt werden, während die passagen-spezifischen Parameter (43211,...,4321 x) unabhängig auf die jeweilige Mahlpassage bezogen optimiert und geregelt werden.

6. Mühlenanlage (1) nach einem der Ansprüche 3 oder 4, **dadurch gekennzeichnet, dass** die Steuerparameter (4311,...,431x) mittels der Regel- und Steuerungsvorrichtung (4) basierend auf den passagen-übergreifenden Parameter (43221,...,4322x) global für mindestens zwei unterschiedliche Verarbeitungslinien (3) optimiert und geregelt werden, während die passagen-spezifischen Parameter (43211,...,4321x) unabhängig auf eine optimierte Generierung der Steuerparameter (4311,...,431x) der jeweilige Passage (3) wirken.

7. Mühlenanlage (1) nach einem der Ansprüche 1 bis 6, **dadurch gekennzeichnet, dass** die zentrale Regel- und Steuerungsvorrichtung (4) operative Prozessrezepte (431) umfasst, wobei basierend auf einem operativen Prozessrezept (431) eine Batch-/Chargen-Steuerung mit einer definierten Verarbeitungsfolge der Verarbeitungseinheiten (31; B_{x/}Cₓ/Sₓ) einer der Verarbeitungslinien (3) regelbar ist, und wobei basierend auf dem operativen Prozessrezept (431) aus einem oder mehreren Eingangsstoffen (5) mit spezifischen Eigenschaftsparametern (51) eine definierte Menge eines Endproduktes (6) mit spezifischen Eigenschaftsparameter (61) erzeugbar ist,
wobei während des Vermahlungsprozesses eines operativen Prozessrezeptes (431) die operativen Steuerparameter (4311,...,431x) und/oder die Batch-/Chargen-Parameter (432) mittels der Regel- und Steuerungsvorrichtung (4) kontinuierlich überwachbar sind, wobei bei der Detektion einer definierbaren Parameterwertschwankung oder Anomalie als definierte Abweichung der überwachten Steuerparameter (4311,...,431x) und/oder der Batch-/Chargen-Parameter (432) vom definierten Steuerparameter (4311,...,431x) und/oder der Batch-/Chargen-Parameter (432) die Steuerparameter (4311,...,431x) automatisiert mittels der Regel- und Steuerungsvorrichtung (4) korrigiert und/oder angepasst werden.

8. Mühlenanlagen (1) nach einem der Ansprüche 1 bis 7 mit den Verarbeitungslinien (3) und zugeordneten Verarbeitungsvorrichtungen (31; B_{x/}Cₓ/Sₓ) und mit der zentralen Regel- und Steuerungsvorrichtung (4) zur selbst-optimierten Steuerung einer Mühlenanlage (1), wobei die passagen-spezifischen Messparameter (43211,...,4321x) mindestens Messparameter betreffend der Ströme und/oder Leistungsaufnahme eines oder mehrerer Walzenstühle (31) der Mühlenanlage (1) umfassen.

9. Mühlenanlagen (1) nach Anspruch 8, **dadurch gekennzeichnet, dass** die ein oder mehreren Verarbeitungsvorrichtungen (31; B_{x/}Cₓ/Sₓ) mindestens Riffelwalzen (B₁, B₂, ..., Bₓ) und/oder Glattwalzen (C₁, C₂, ..., Cₓ) umfassen.

10. Mühlenanlagen (1) nach einem der Ansprüche 8 oder 9, **dadurch gekennzeichnet, dass** die passagen-spezifischen Messparameter (43211,...,4321x) mindestens Messparameter betreffend der Ströme und/oder Leistungsaufnahme aller Walzenstühle (31) der Mühle (2) umfasst.

11. Mühlenanlagen (1) nach einem der Ansprüche 1 bis 10, **dadurch gekennzeichnet, dass** mittels prozess-typischer operativer Steuerparameter (4311,...,431x) eines optimierten Batch-/Chargen-Prozesses im Normbereich definierte Qualitätsparameter des Endproduktes (6) und spezifische Mehlausbeute (62) in Abhängigkeit vom den Eingangsprodukten (5) bestimmbar sind.

12. Mühlenanlagen (1) nach einem der Ansprüche 1 bis 11, **dadurch gekennzeichnet, dass** die definierten Eigenschaftsparameter des Endproduktes (61) mindestens Partikelgrössenverteilung (611) und/oder Stärkebeschädigung (612) und/oder Proteinqualität (613) und/oder Wassergehalt (614) umfassen.

13. Mühlenanlagen (1) nach einem der Ansprüche 7 bis 12, **dadurch gekennzeichnet, dass** die überwachten, operativen Steuerparameter (4311,...,431x) und/oder die Batch-/Chargen-Parameter (432) mindestens Ausbeute (62) und/oder Energieaufnahme/-verbrauch und/oder Durchsatz/Maschinenlaufzeit umfassen.

14. Mühlenanlagen (1) nach einem der Ansprüche 1 bis 13, **dadurch gekennzeichnet, dass** die zentrale Regel- und Steuerungsvorrichtung (4) eine einheitliche web-basierte Überwachung verschiedener Verarbeitungslinien (3) anzeigbar umfasst, mittels welcher die Mühlenanlage (1) zentral überwachbar und/oder optimiert steuerbar ist.

15. Mühlenanlagen (1) nach einem der Ansprüche 1 bis 14, **dadurch gekennzeichnet, dass** ein Überwachungs- oder Kontrolldisplay (21/45) des Kontrollsystems der Betriebsvorrichtung (20) und/oder der Regel- und Steuerungsvorrichtung (4) einen Annäherungssensor und/oder Bewegungssensor (211/451) umfasst, wobei das Display automatisch an- und ausgeschaltet wird in Abhängigkeit der Messergebnisse des Annäherungssensors und/oder Bewegungssenors der Mahlanlage basierend auf der gemessenen Distanz zu einem Operator der Mahlanlage (1) und/oder der Mühle (2).

16. Verfahren zur optimierten Steuerung einer Mühlenanlage (1) umfassend ein oder mehrere Mühlen (2) mit ein oder mehreren Verarbeitungslinien (3) zur industriellen Herstellung einer Vielzahl von Mahlprodukten, wobei in der Verarbeitungslinie (3) mittels mindestens einer Mahlpassage (B, C) mit Mahlwalzenpaaren (B₁, B₂, ...,Bₓ; C₁, C₂,...,Cₓ) ein Mahlgut vermahlen und mittels mindestens einer nachgeordneten Siebpassage (S₁, S₂,..., Sₓ) gesichtet und/oder gesiebt wird, wobei über eine Vermahlungslinie ein spezifisches Mahlprodukt mit spezifischen Ausbeuteparametern und Mahlproduktparametern erzeugt wird und wobei jede Mühle (2) der Mühlenanlage (1) mindestens eine speicherprogrammierbare Steuerung (201/PLC) zur lokalen Steuerung und/oder Reglung von den den Verarbeitungslinien (3) zugeordneten Verarbeitungsvorrichtungen (31; B_{x/}Cₓ/Sₓ) über zugeordnete I/O Interfaces (32) umfasst, **dadurch gekennzeichnet,**
**dass** die Mühlenanlage (1) eine zentrale Regel- und Steuerungsvorrichtung (4) zur optimierten Steuerung der Mühlenanlage (1) umfasst, wobei die speicherprogrammierbare Steuerungen (201/PLC) bidirektional über Netzwerkinterfaces (202) mit der zentrale Regel- und Steuerungsvorrichtung (4) verbunden und mittels von der zentrale Regel- und Steuerungsvorrichtung (4) übertragenen Steuerparametern (4311,...,431x) angesprochen wird und wobei die Verarbeitungsvorrichtungen (31; B_{x/}Cₓ/Sₓ) einer Verarbeitungslinie (3) basierend auf den übertragenen Steuerparametern (4311,...,431x) der Regel- und Steuerungsvorrichtung (4) mittels den speicherprogrammierbare Steuerungen (201/PLC) remote über die zugeordneten I/O Interfaces (32) angesteuert und in ihrem Betrieb einzeln lokal geregelt werden,
**dass** die zentrale Regel- und Steuerungsvorrichtung (4) die zu übertragenden Steuerparameter (4311,...,431x) in Abhängigkeit von passagen-spezifischen (43211,...,4321x) und/oder passagen-übergreifenden (43221,...,4322x) Batch-/Chargen-Parameter (432) generiert, wobei die passagen-übergreifenden Parameter (43221,...,4322x) Parameter mit gleicher oder entsprechender Relevanz bei verschiedenen Verarbeitungslinien (3) mit den Verarbeitungsvorrichtungen (31) umfassen, und zentral durch die Regel- und Steuerungsvorrichtung (4) zum Generieren der Steuerung/Regelung und Überwachung mehrerer Verarbeitungslinien (3) verwendet werden, und wobei die passagen-spezifische Parameter (43211,...,4321x) Parameter mit nur spezifischer Relevanz für eine bestimmte Verarbeitungslinie (3) oder spezifisch für eine Verarbeitungsvorrichtungen (31) umfassen, und
**dass** mittels mindestens einem der Steuerparameter (4311,...,431x) basierend auf einem oder mehreren der passagen-spezifische und/oder passagen-übergreifenden Parametern (432) verschiedene Verarbeitungslinien (3) mit zugeordneten Verarbeitungsvorrichtungen (31; B_{x/}Cₓ/Sₓ) mittels der Regel- und Steuerungsvorrichtung (4) zentral optimiert und/oder einheitlich geregelt werden, wobei die Regel- und Steuerungsvorrichtung (4) die passagen-übergreifenden Parameter (43221,...,4322x) global, vorrichtungs-übergreifend für mindestens zwei der Verarbeitungslinien (3) optimiert und regelt, während die Regel- und Steuerungsvorrichtung (4) die passagen-spezifischen Parameter unabhängig auf die jeweilige Verarbeitungslinie (3) bezogen optimiert und regelt.

## Claims

1. Milling installation (1) comprising a mill (2) with a plurality of processing lines (3) or a plurality of mills (2) with one or more processing lines (3) for industrial production of a plurality of milling products, wherein a processing line (3) comprises at least one milling passage (B, C) with milling roll pairs (B1, B2, Bx; C1, C2, Cx) for milling a milling material and at least one downstream screening passage (S) for sifting or screening the milling product, wherein a specific milling product with specific yield parameters and milling product parameters can be produced via the processing lines (3), and wherein each mill (2) of the milling installation (1) comprises at least one memory-programmable controller (201/PLC) for local open-loop and/or closed-loop control of the processing devices (31; Bx/Cx/Sx), assigned to the processing lines (3), via assigned I/O interfaces (32), **characterised in that**
the milling installation (1) comprises a central closed-loop and open-loop control device (4) for optimised control of the milling installation (1), wherein the memory-programmable controllers (201/PLC) are connected bidirectionally via network interfaces (202) to the central closed-loop and open-loop control device (4) and can respond to control parameters (4311,...,431x) transmitted from the central closed-loop and open-loop control device (4), and wherein the processing devices (31; Bx/Cx/Sx) of a processing line (3) are remotely actuatable based on the transmitted control parameters (4311,...,431x) of the closed-loop and open-loop control device (4) by means of the memory-programmable controllers (201/PLC) via the assigned I/O interfaces (32) and are locally controllable individually during their operation,
the central closed-loop and open-loop control device (4) comprises means (44) for generating the control parameters (4311,...,431x) to be transmitted depending on passage-specific (43211,...,4321x) and/or passage-encompassing (43221,...,4322x) batch parameters (432), wherein the passage-encompassing parameters (43221,...,4322x) comprise parameters with the same or corresponding relevance for different processing lines (3) with the processing devices (31) and are usable centrally by the closed-loop and open-loop control device (4) to generate the open-loop/closed-loop control and monitor a plurality of processing lines (3), and wherein the passage-specific parameters (43211,...,4321x) comprise parameters with only specific relevance for a certain processing line (3) or specific for a processing device (31) assigned to a specific processing line (3), and,
by means of at least one of the control parameters (4311,...,431x) on the basis of one or more of the passage-specific and/or passage-encompassing parameters (432), different processing lines (3) with assigned processing devices (31; Bx/Cx/Sx) can be optimised centrally by means of the closed-loop and open-loop control device (4) and/or can be controlled uniformly, wherein by means of the closed-loop and open-loop control device (4) the passage-encompassing parameters (43221,...,4322x) can be optimised and controlled globally, in a device-encompassing manner for at least two of the processing lines (3), whereas by means of the closed-loop and open-loop control device (4) the passage-specific parameters can be optimised and controlled independently based on the particular processing line (3).

2. Milling installation (1) according to claim 1, **characterised in that** the remote open-loop and closed-loop control of the processing devices (31; B_{x/}Cₓ/Sₓ) is performed by local machine processes of the processing devices (31; B_{x/}Cₓ/Sₓ) by means of the closed-loop and open-loop control device (4) in real-time data exchange.

3. Milling installation (1) according to one of claims 1 or 2, **characterised in that** the closed-loop and open-loop control device (4) comprises a network interface (42), by means of which a control system (20) of the mill (2) comprising the memory-programmable controllers (201/PLC) and the network interfaces (202) can be accessed by the closed-loop and open-loop control device (4), and the central closed-loop and open-loop control device (4) comprises means (44) for generating the control parameters (4311,...,431x) to be transmitted depending on passage-specific (43211,...,4321x) and/or passage-encompassing (43221,...,4322x) batch parameters (432), wherein by means of at least one of the control parameters (4311,...,431x) and on the basis of one or more of the passage-specific and/or environment-specific parameters (432), different processing lines (3) with assigned processing devices (31; B_{x/}Cₓ/Sₓ) can be centrally optimised and/or uniformly controlled by means of the closed-loop and open-loop control device (4).

4. Milling installation (1) according to claim 3, **characterised in that** the passage-encompassing parameters (43221,...,4322x) comprise location-dependent measurement parameters comprising air humidity and/or air pressure and/or ambient temperature, and the passage-specific parameters (43211,...,4321x) comprise local operating parameters of the processing devices (31; B_{x/}Cₓ/Sₓ) comprising energy consumption of the milling roll pairs (B₁, B₂, ..., Bₓ; C₁, C₂, ..., Cₓ) and/or preliminary pressure and/or input temperature of the milling material.

5. Milling installation (1) according to one of claims 3 or 4, **characterised in that** by means of the closed-loop and open-loop control device (4) the passage-encompassing parameters (43221,...,4322x) are optimised and controlled globally for at least two milling passages, whereas the passage-specific parameters (43211,...,4321x) are optimised and controlled independently, based on the particular milling passage.

6. Milling installation (1) according to one of claims 3 or 4, **characterised in that** by means of the closed-loop and open-loop control device (4) the control parameters (4311,...,431x) are optimised and controlled globally for at least two different processing lines (3) on the basis of the passage-encompassing parameters (43221,...,4322x), whereas the passage-specific parameters (43211,...,4321x) act independently on an optimised generation of the control parameters (4311,...,431x) of the particular passage (3).

7. Milling installation (1) according to one of claims 1 to 6, **characterised in that** the central closed-loop and open-loop control device (4) comprises operative process recipes (431), wherein, on the basis of an operative process recipe (431), a batch control with a defined processing sequence of the processing units (31; B_{x/}Cₓ/Sₓ) of one of the processing lines (3) can be controlled, and wherein, on the basis of the operative process recipe (431), a defined amount of an end product (6) with specific property parameters (61) can be produced from one or more feed substances (5) with specific property parameters (51),
wherein, during the milling process of an operative process recipe (431), the operative control parameters (4311,...,431x) and/or the batch parameters (432) can be monitored continuously by means of the closed-loop and open-loop control device (4), wherein, upon detection of a definable parameter value fluctuation or anomaly as a defined deviation of the monitored control parameters (4311,...,431x) and/or the batch parameters (432) from the defined control parameter (4311,...,431x) and/or the batch parameters (432), the control parameters (4311,...,431x) are corrected and/or adapted in automated fashion by means of the closed-loop and open-loop control device (4).

8. Milling installations (1) according to one of claims 1 to 7 comprising the processing lines (3) and assigned processing devices (31; B_{x/}Cₓ/Sₓ) and comprising the central closed-loop and open-loop control device (4) for self-optimised control of a milling installation (1), wherein the passage-specific measurement parameters (43211,...,4321x) comprise at least one measurement parameter relating to the currents and/or power consumption of one or more roll stands (31) of the milling installation (1).

9. Milling installations (1) according to claim 8, **characterised in that** the one or more processing devices (31; B_{x/}Cₓ/Sₓ) comprise at least fluted rolls (B₁, B_{2,}..., Bₓ) and/or smooth rolls (C₁, C₂,...,Cₓ).

10. Milling installations (1) according to one of claims 8 or 9, **characterised in that** the passage-specific measurement parameter (43211,...,4321x) comprises at least measurement parameters relating to the flows and/or power draw of all roll stands (31) of the mill (2).

11. Milling installations (1) according to one of claims 1 to 10, **characterised in that**, by means of process-typical operative control parameters (4311,...,431x) of an optimised batch process in the standard range, defined quality parameters of the end product (6) and specific flour yield (62) are determinable depending on the input products (5).

12. Milling installations (1) according to one of claims 1 to 11, **characterised in that** the defined property parameters of the end product (61) comprise at least particle size distribution (611) and/or starch damage (612) and/or protein quality (613) and/or water content (614).

13. Milling installations (1) according to one of claims 7 to 12, **characterised in that** the monitored, operative control parameters (4311,...,431x) and/or the batch parameters (432) comprise at least yield (62) and/or energy draw/consumption and/or throughput/machine running time.

14. Milling installations (1) according to one of claims 1 to 13, **characterised in that** the central closed-loop and open-loop control device (4) comprises a uniform web-based monitoring of different processing lines (3) in a displayable manner, by means of which the milling installation (1) can be monitored centrally and/or controlled in an optimised manner.

15. Milling installations (1) according to one of claims 1 to 14, **characterised in that** a monitoring or control display (21/45) of the control system of the operating device (20) and/or of the closed-loop and open-loop control device (4) comprises a proximity sensor and/or motion sensor (211/451), wherein the display is automatically switched on and off depending on the measurement results of the proximity sensor and/or motion sensor of the milling installation on the basis of the measured distance from an operator of the milling installation (1) and/or the mill (2).

16. Method for optimised control of a milling installation (1) comprising a mill (2) with a plurality of processing lines (3) or a plurality of mills (2) with one or more processing lines (3) for industrial production of a plurality of milling products, wherein in one processing line (3) by means of at least one milling passage (B, C) with milling roll pairs (B1, B2, Bx; C1, C2, Cx) a milling material is milled and by means of at least one downstream screening passage (S) is screened and/or sifted, wherein a specific milling product with specific yield parameters and milling product parameters is produced via the processing line (3), and wherein each mill (2) of the milling installation (1) comprises at least one memory-programmable controller (201/PLC) for local open-loop and/or closed-loop control of the processing devices (31; Bx/Cx/Sx), assigned to the processing lines (3), via assigned I/O interfaces (32), **characterised in that**
the milling installation (1) comprises a central closed-loop and open-loop control device (4) for optimised control of the milling installation (1), wherein the memory-programmable controllers (201/PLC) are connected bidirectionally via network interfaces (202) to the central closed-loop and open-loop control device (4) and are responsive to control parameters (4311,...,431x) transmitted by means of the central closed-loop and open-loop control device (4), and wherein the processing devices (31; Bx/Cx/Sx) of a processing line (3) are remotely actuated based on the transmitted control parameters (4311,...,431x) of the closed-loop and open-loop control device (4) by means of the memory-programmable controllers (201/PLC) via the assigned I/O interfaces (32) and are locally controlled individually during their operation,
the central closed-loop and open-loop control device (4) generates the control parameters (4311,...,431x) to be transmitted depending on passage-specific (43211,...,4321x) and/or passage-encompassing (43221,...,4322x) batch parameters (432), wherein the passage-encompassing parameters (43221,...,4322x) comprise parameters with the same or corresponding relevance for different processing lines (3) with the processing devices (31) and are usable centrally by the closed-loop and open-loop control device (4) to generate the open-loop/closed-loop control and monitor a plurality of processing lines (3), and wherein the passage-specific parameters (43211,...,4321x) comprise parameters with only specific relevance for a certain processing line (3) or specific for a processing device (31) assigned to a specific processing line (3), and,
by means of at least one of the control parameters (4311,...,431x) on the basis of one or more of the passage-specific and/or passage-encompassing parameters (432), different processing lines (3) with assigned processing devices (31; Bx/Cx/Sx) are optimised centrally by means of the closed-loop and open-loop control device (4) and/or are controlled uniformly, wherein the closed-loop and open-loop control device (4) optimises and controls the passage-encompassing parameters (43221,...,4322x) globally, in a device-encompassing manner for at least two of the processing lines (3), whereas the closed-loop and open-loop control device (4) optimises and controls the passage-specific parameters independently based on the particular processing line (3).

## Revendications

1. Installation de minoterie (1) comprenant un moulin (2) doté de plusieurs lignes de transformation (3) ou comprenant plusieurs moulins (2) dotés d'une ou plusieurs lignes de transformation (3) et destinée à la production industrielle d'une pluralité de produits de minoterie, dans laquelle une ligne de transformation (3) comprend au moins un passage de mouture (B, C) doté de paires de cylindres de mouture (B1, B2, Bx; C1, C2, Cx) destinés à moudre une matière et au moins un passage de tamisage (S) situé en aval et destiné au triage ou tamisage de ladite matière, les lignes de transformation (3) permettant de produire un produit de minoterie spécifique présentant des paramètres de rendement et des paramètres de produit spécifiques et chaque moulin (2) de l'installation de minoterie (1) comprenant au moins un automate programmable industriel (201/PLC) destiné à la commande et/ou régulation locale des dispositifs de transformation (31 ; Bx/Cx/Sx) associés aux lignes de transformation (3) par le biais d'interfaces I/O (32) associées ; **caractérisée en ce que**
l'installation de minoterie (1) comprend un dispositif de réglage et de commande (4) central permettant une commande optimisée de l'installation de minoterie (1), lesdits automates programmables industriels (201/PLC) étant raccordés de manière bidirectionnelle au dispositif de réglage et de commande (4) central par le biais d'interfaces réseau (202) et pouvant réagir à des paramètres de commande (4311,...,431x) transmis au moyen du dispositif de réglage et de commande (4) central, et lesdits dispositifs de transformation (31 ; Bx/Cx/Sx) d'une ligne de transformation (3) étant pilotables à distance au moyen des automates programmables industriels (201/PLC), par le biais des interfaces I/O (32) associées, et réglables localement individuellement dans leur fonctionnement en fonction des transmissions des paramètres de commande (4311,...,431x) du dispositif de réglage et de commande (4),
le dispositif de réglage et de commande (4) central comprend des moyens (44) permettant de générer les paramètres de commande (4311,...,431x) à transmettre, en fonction de paramètres de lots (432) spécifiques aux passages (43211,...,4321x) et/ou inter-passages (43221,...,4322x), lesdits paramètres inter-passages (43221,...,4322x) comprenant des paramètres de pertinence similaire ou analogue pour diverses lignes de transformation (3) comportant les dispositifs de transformation (31), et étant utilisables de manière centrale par le dispositif de réglage et de commande (4) pour générer la commande/régulation et la surveillance de plusieurs lignes de transformation (3), et lesdits paramètres spécifiques aux passages (43211,...,4321x) comprenant des paramètres ayant uniquement une pertinence spécifique pour une ligne de transformation (3) donnée ou spécifique pour un dispositif de transformation (31) associé à une ligne de transformation (3) donnée, et
diverses lignes de transformation (3) comportant les dispositifs de transformation (31 ; Bx/Cx/Sx) associés peuvent être optimisées de manière centralisée et/ou régulées uniformément au moyen du dispositif de réglage et de commande (4) à l'aide d'au moins un des paramètres de commande (4311,...,431x), compte tenu d'un ou plusieurs des paramètres spécifiques aux passages et/ou inter-passages (432), lesdits paramètres inter-passages (43221,...,4322x) pouvant être optimisés et régulés de façon globale et recoupant les dispositifs pour au moins deux des lignes de transformation (3) au moyen du dispositif de réglage et de commande (4), tandis que les paramètres spécifiques aux passages peuvent être optimisés et régulés indépendamment, concernant une ligne de transformation (3) donnée, au moyen du dispositif de réglage et de commande (4).

2. Installation de minoterie (1) selon la revendication 1, **caractérisée en ce que** la commande et régulation à distance des dispositifs de transformation (31 ; B_{x/}Cₓ/Sₓ) est effectuée par des processus machines locaux des dispositifs de transformation (31 ; B_{x/}Cₓ/Sₓ) au moyen du dispositif de réglage et de commande (4) avec un échange de données en temps réel.

3. Installation de minoterie (1) selon l'une des revendications 1 et 2, **caractérisée en ce que** le dispositif de réglage et de commande (4) comprend une interface réseau (42) au moyen de laquelle un système de contrôle (20) du moulin (2), comprenant les automates programmables industriels (201/PLC) et les interfaces réseau (202), est accessible au dispositif de réglage et de commande (4), et le dispositif de réglage et de commande (4) central comprend des moyens (44) permettant de générer les paramètres de commande (4311,...,431x) à transmettre, en fonction de paramètres de lots (432) spécifiques aux passages (43211,...,4321x) et/ou inter-passages (43221,...,4322x), diverses lignes de transformation (3) comportant les dispositifs de transformation (31 ; Bx/Cx/Sx) associés pouvant être optimisées de manière centralisée et/ou régulées uniformément au moyen du dispositif de réglage et de commande (4) à l'aide d'au moins un des paramètres de commande (4311,...,431x), compte tenu d'un ou plusieurs des paramètres spécifiques aux passages et/ou de paramètres spécifiques à l'environnement (432).

4. Installation de minoterie (1) selon la revendication 3, **caractérisée en ce que** les paramètres inter-passages (43221,...,4322x) comprennent des paramètres de mesure fonction du lieu comprenant l'humidité de l'air et/ou la pression de l'air et/ou la température ambiante, et les paramètres spécifiques aux passages (43211,...,4321x) comprennent des paramètres d'exploitation locaux des dispositifs de transformation (31 ; B_{x/}Cₓ/Sₓ) comprenant la consommation énergétique des paires de cylindres de mouture (B₁, B₂, ..., Bₓ; C₁, C₂, ..., Cₓ) et/ou la pression préalable et/ou la température d'entrée de la matière à moudre.

5. Installation de minoterie (1) selon l'une des revendications 3 et 4, **caractérisée en ce que** les paramètres inter-passages (43221,...,4322x) sont optimisés et régulés de façon globale pour au moins deux passages de mouture au moyen du dispositif de réglage et de commande (4), tandis que les paramètres spécifiques aux passages (43211,...,4321x) sont optimisés et régulés indépendamment, concernant un passage de mouture donné.

6. Installation de minoterie (1) selon l'une des revendications 3 et 4, **caractérisée en ce que** les paramètres de commande (4311,...,431x) sont optimisés et régulés de façon globale pour au moins deux lignes de transformation (3) différentes au moyen du dispositif de réglage et de commande (4) compte tenu des paramètres inter-passages (43221,...,4322x), tandis que les paramètres spécifiques aux passages (43211,...,4321x) agissent indépendamment sur une génération optimisée des paramètres de commande (4311,...,431x) du passage (3) donné.

7. Installation de minoterie (1) selon l'une des revendications 1 à 6, **caractérisée en ce que** le dispositif de réglage et de commande (4) central comprend des recettes de processus opérationnelles (431), une commande de lots étant réglable avec une séquence de transformation définie des unités de transformation (31 ; B_{x/}Cₓ/Sₓ) d'une des lignes de transformation (3), compte tenu d'une recette de processus opérationnelle (431), et une quantité définie d'un produit final (6) présentant des paramètres caractéristiques (61) spécifiques pouvant être produite compte tenu de ladite recette de processus opérationnelle (431) à partir d'une ou plusieurs matières de départ (5) présentant des paramètres caractéristiques (51) spécifiques,
et dans laquelle, pendant le processus de mouture propre à une recette de processus opérationnelle (431), les paramètres de commande opérationnels (4311,...,431x) et/ou les paramètres de lots (432) peuvent être surveillés en continu au moyen du dispositif de réglage et de commande (4), étant entendu que, lorsqu'une fluctuation de valeurs de paramètre ou anomalie définissable est détectée sous la forme d'un écart défini du paramètre de commande (4311,...,431x) et/ou du paramètre de lots (432) surveillés par rapport au paramètre de commande (4311,...,431x) et/ou paramètre de lots (432) défini, les paramètres de commande (4311,...,431x) sont corrigés et/ou adaptés automatiquement au moyen du dispositif de réglage et de commande (4).

8. Installations de minoterie (1) selon l'une des revendications 1 à 7 comportant les lignes de transformation (3) et les dispositifs de transformation (31 ; B_{x/}Cₓ/Sₓ) associés et comportant le dispositif de réglage et de commande (4) central pour une commande auto-optimisée d'une installation de minoterie (1), dans lesquelles les paramètres de mesure spécifiques aux passages (43211,...,4321x) comprennent au moins des paramètres de mesure concernant les flux et/ou la consommation d'énergie d'un ou plusieurs appareils à cylindres (31) de l'installation de minoterie (1).

9. Installations de minoterie (1) selon la revendication 8, **caractérisées en ce que** les un ou plusieurs dispositifs de transformation (31 ; B_{x/}Cₓ/Sₓ) comprennent au moins des cylindres cannelés (B₁, B₂, ..., Bₓ) et/ou des cylindres lisses (C₁, C₂,...,Cₓ).

10. Installations de minoterie (1) selon l'une des revendications 8 et 9, **caractérisées en ce que** les paramètres de mesure spécifiques aux passages (43211,...,4321x) comprennent au moins des paramètres de mesure concernant les flux et/ou la consommation d'énergie de tous les appareils à cylindres (31) du moulin (2).

11. Installations de minoterie (1) selon l'une des revendications 1 à 10, **caractérisées en ce que** les paramètres de commande opérationnels typiques du processus (4311,...,431x) propres à un processus par lots optimisé permettent de déterminer des paramètres de qualité du produit final (6) définis dans l'intervalle normal et des rendements de farine (62) spécifiques en fonction des produits de départ (5).

12. Installations de minoterie (1) selon l'une des revendications 1 à 11, **caractérisées en ce que** les paramètres caractéristiques du produit final (61) définis comprennent au moins la distribution des tailles de particules (611) et/ou l'endommagement de l'amidon (612) et/ou la qualité des protéines (613) et/ou la teneur en eau (614).

13. Installations de minoterie (1) selon l'une des revendications 7 à 12, **caractérisées en ce que** les paramètres de commande opérationnels (4311,...,431x) surveillés et/ou les paramètres de lots (432) comprennent au moins le rendement (62) et/ou la consommation/l'absorption d'énergie et/ou le débit/temps d'exploitation des machines.

14. Installations de minoterie (1) selon l'une des revendications 1 à 13, **caractérisées en ce que** le dispositif de réglage et de commande (4) central comprend de manière visible une surveillance uniforme, basée sur le Web, de plusieurs lignes de transformation (3), au moyen de laquelle l'installation de minoterie (1) peut être surveillée de manière centralisée et/ou peut être commandée de façon optimisée.

15. Installations de minoterie (1) selon l'une des revendications 1 à 14, **caractérisées en ce qu'**un écran de surveillance ou de contrôle (21/45) du système de contrôle du dispositif d'exploitation (20) et/ou du dispositif de réglage et de commande (4) comprend un capteur de proximité et/ou un capteur de mouvement (211/451), l'écran s'allumant et s'éteignant automatiquement en fonction des résultats de mesure du capteur de proximité et/ou du capteur de mouvement de l'installation de minoterie compte tenu de la mesure de la distance par rapport à un operateur de l'installation de minoterie (1) et/ou du moulin (2).

16. Procédé de commande optimisée d'une installation de minoterie (1) comprenant un moulin (2) doté de plusieurs lignes de transformation (3) ou comprenant plusieurs moulins (2) dotés d'une ou plusieurs lignes de transformation (3) et destinée à la production industrielle d'une pluralité de produits de minoterie, dans lequel, dans une ligne de transformation (3), une matière est moulue au moyen d'au moins un passage de mouture (B, C) doté de paires de cylindres de mouture (B1, B2, ...,Bx; C1, C2,...,Cx) et est triée et/ou tamisée au moyen d'au moins un passage de tamisage (S1, S₂,..., Sx) situé en aval de ce dernier, la ligne de transformation (3) produisant un produit de minoterie spécifique présentant des paramètres de rendement et des paramètres de produit spécifiques et chaque moulin (2) de l'installation de minoterie (1) comprenant au moins un automate programmable industriel (201/PLC) destiné à la commande et/ou régulation locale des dispositifs de transformation (31 ; Bx/Cx/Sx) associés aux lignes de transformation (3) par le biais d'interfaces I/O (32) associées ; **caractérisé en ce que**
l'installation de minoterie (1) comprend un dispositif de réglage et de commande (4) central permettant une commande optimisée de l'installation de minoterie (1), lesdits automates programmables industriels (201/PLC) étant raccordés de manière bidirectionnelle au dispositif de réglage et de commande (4) central par le biais d'interfaces réseau (202) et réagissant à des paramètres de commande (4311,...,431x) transmis au moyen du dispositif de réglage et de commande (4) central, et lesdits dispositifs de transformation (31 ; Bx/Cx/Sx) d'une ligne de transformation (3) étant pilotés à distance, au moyen des automates programmables industriels (201/PLC), par le biais des interfaces I/O (32) associées, et réglés localement individuellement dans leur fonctionnement en fonction des transmissions des paramètres de commande (4311,...,431x) du dispositif de réglage et de commande (4),
le dispositif de réglage et de commande (4) central générant les paramètres de commande (4311,...,431x) à transmettre, en fonction de paramètres de lots (432) spécifiques aux passages (43211,...,4321x) et/ou inter-passages (43221,...,4322x), lesdits paramètres inter-passages (43221,...,4322x) comprenant des paramètres de pertinence similaire ou analogue pour diverses lignes de transformation (3) comportant les dispositifs de transformation (31), et étant utilisés de manière centrale par le dispositif de réglage et de commande (4) pour générer la commande/régulation et la surveillance de plusieurs lignes de transformation (3), et lesdits paramètres spécifiques aux passages (43211,...,4321x) des paramètres ayant uniquement une pertinence spécifique pour une ligne de transformation (3) donnée ou spécifique pour un dispositif de transformation (31) associé à une ligne de transformation (3) donnée, et
diverses lignes de transformation (3) comportant les dispositifs de transformation (31 ; Bx/Cx/Sx) associés sont optimisées de manière centralisée et/ou régulées uniformément au moyen du dispositif de réglage et de commande (4) à l'aide d'au moins un des paramètres de commande (4311,...,431x), compte tenu d'un ou plusieurs des paramètres spécifiques aux passages et/ou inter-passages (432), ledit dispositif de réglage et de commande (4) optimisant et régulant les paramètres inter-passages (43221,...,4322x) de façon globale et recoupant les dispositifs pour au moins deux des lignes de transformation (3), tandis que le dispositif de réglage et de commande (4) optimise et régule les paramètres spécifiques aux passages indépendamment, concernant une ligne de transformation (3) donnée.
